# EUROPÄISCHE PATENTSCHRIFT

(11) **EP 4 228 958 B1**
(45) Veröffentlichungstag und Bekanntmachung des Hinweises auf die Patenterteilung: **24.07.2024**
(21) Anmeldenummer: 21783463.9
(22) Anmeldetag: 24.09.2021
(51) Int. Cl.: B62M 21/00, F16H 49/00, H02K 7/116, B62M 23/00, B62M 6/55, B62M 6/60

(54) **ANTRIEBSEINHEIT FÜR EIN GLEICHZEITIG AUS MENSCHLICHER MUSKELKRAFT UND ELEKTROMOTORISCH ANTREIBBARES FORTBEWEGUNGSMITTEL**
DRIVE UNIT FOR A MEANS OF LOCOMOTION SIMULTANEOUSLY DRIVABLE BY HUMAN MUSCULAR STRENGTH AND ELECTRIC MOTORS
UNITÉ D'ENTRAÎNEMENT POUR UN MOYEN DE LOCOMOTION POUVANT ÊTRE ENTRAÎNÉ SIMULTANÉMENT PAR UNE FORCE MUSCULAIRE HUMAINE ET DES MOTEURS ÉLECTRIQUES

(30) Priorität: 13.10.2020 DE 102020212905
(43) Veröffentlichungstag der Anmeldung: 23.08.2023
(73) Patentinhaber: Killwatt GmbH, 95643 Tirschenreuth (DE)
(72) Erfinder: ACKERMANN, Hans Peter, 95643 Tirschenreuth (DE); ACKERMANN, Volker, 95643 Tirschenreuth (DE)
(74) Vertreter: Zimmermann & Partner Patentanwälte mbB
(86) Internationale Anmeldenummer: PCT/EP2021/076342
(87) Internationale Veröffentlichungsnummer: WO 2022/078730

(56) Entgegenhaltungen:
- EP-A1- 0 093 888
- EP-A1- 3 247 619
- DE-A1- 102017 219 608
- FR-A1- 2 816 386

## Beschreibung

Die Erfindung betrifft eine Antriebseinheit für ein gleichzeitig durch aus menschlicher Muskelkraft und elektromotorisch bereitgestellte Antriebsenergie antreibbares Fortbewegungsmittel.

Gattungsgemäße Fortbewegungsmittel sind beispielsweise ein- oder mehrspurige Fahrzeuge wie Fahrräder, insbesondere Elektrofahrräder, E-Bikes oder Pedelecs, aber auch Wasserfahrräder, Tretboote oder Rollstühle. Insbesondere sind gattungsgemäße Fortbewegungsmittel Fahrzeuge der Fahrzeugklassen L1e, L2e, L3e, L4e, L5e, L6e und L7e gemäß Artikel 4 der EU-Verordnung 2013/168/EU vom 15. Januar 2013. Ferner zählen hierzu insbesondere Fahrzeuge mit einer bauartbedingten Höchstgeschwindigkeit von bis zu 6 km/h, Fahrzeuge, die ausschließlich zur Benutzung durch körperbehinderte Personen bestimmt sind, wie beispielsweise Rollstühle, Fahrzeuge, die ausschließlich für die Benutzung im sportlichen Wettbewerb bestimmt sind, Fahrräder mit Pedalantrieb mit Trethilfe, die mit einem elektromotorischen Hilfsantrieb mit einer maximalen Nenndauerleistung von bis zu 250 W ausgestattet sind, dessen Unterstützung unterbrochen wird, wenn der Fahrer im Treten einhält, und dessen Unterstützung sich mit zunehmender Fahrzeuggeschwindigkeit progressiv verringert und unterbrochen wird, bevor die Geschwindigkeit des Fahrzeugs 25 km/h erreicht, selbstbalancierende Fahrzeuge mit elektromotorischem Fahrantrieb, Sportfahrzeuge mit Pedalantrieb, Fahrzeuge mit Pedalantrieb, die nicht mindestens einen Sitzplatz haben, und Fahrzeuge mit Pedalantrieb mit einem R-Punkt (gemäß ECE-R 17) ≤400 mm. Sie weisen häufig ein Vorderrad und wenigstens ein Hinterrad auf, die über einen Rahmen miteinander verbunden sind. Es können allerdings auch mehrere Hinterräder, beispielsweise zwei Hinterräder, und/oder mehrere Vorderräder, beispielsweise zwei Vorderräder, insbesondere in beliebiger Kombination, vorhanden sein. Diese können beispielsweise quer zu einer Vorwärtsfahrrichtung nebeneinander, wie beispielsweise in einem Rollstuhl, einem Dreirad oder einem Fahrzeug mit einem Beiwagen, oder auch in Vorwärtsfahrrichtung hintereinander angeordnet sein, wie beispielsweise in einem Tandem. Derartige Fortbewegungsmittel werden immer häufiger mit wenigstens einem Elektromotor ausgestattet, der den Nutzer beim Antrieb des Fortbewegungsmittels unterstützen soll. Typischerweise werden sie nicht von diesem Elektromotor alleine angetrieben, sondern der Elektromotor unterstützt den Nutzer beim Antrieb des Fortbewegungsmittels aus eigener, menschlicher Muskelkraft. Der Grad der Unterstützung ist dabei meistens wählbar. Auf diese Weise kann ein Nutzer während einer Fahrt mit einem derartigen Fortbewegungsmittel genau so viel eigene Leistung aufbringen, wie er kann oder möchte, während er sich dennoch mit komfortabler und auch im Alltag nutzbarer Geschwindigkeit fortbewegt. Dokument EP3247619A1 zeigt die Präambel des Anspruchs 1.

Neben der Unterstützung des Nutzers beim Antrieb des Fortbewegungsmittels ist es ebenfalls bereits bekannt, Antriebseinheiten für derartige Fortbewegungsmittel mit zwei Elektromotoren und einem Summiergetriebe auszustatten. Auf diese Weise kann ein stufenloses Getriebe (CVT - *continuously variable transmission)* realisiert werden, welches beispielsweise von einer Steuereinheit gesteuert wird. Der Bediener muss dann nicht, wie beispielsweise bei herkömmlichen Fahrrädern, aus einer Vielzahl von zur Verfügung stehenden diskreten Gängen den aktuell passenden heraussuchen. Die für die aktuelle Fahrsituation passende Übersetzung wird vielmehr stufenlos von der Steuereinheit durch Ansteuerung wenigstens eines der Elektromotoren am Summiergetriebe eingestellt. Derartige Antriebseinheiten sind beispielsweise aus EP 1 642 820 A1 und EP 2 218 635 A1 bekannt. Als Summiergetriebe werden bei diesen Schriften Planetengetriebe eingesetzt.

Problematisch an den bisherigen Antriebseinheiten ist deren Baugröße, insbesondere quer zur Längsachse des Fortbewegungsmittels. Die Antriebseinheit wird typischerweise an oder in der Nähe einer Radnabe beziehungsweise an oder in der Nähe eines Antriebslagers, beispielsweise Tretlagers, angeordnet. Zum einen soll die Antriebseinheit nicht zu weit beidseits über das Rad hinausragen. Zum anderen ist bei der Anordnung am Tretlager zu beachten, dass beispielsweise die Kurbelarme der Pedale eines Fahrrades aufgrund der menschlichen Anatomie typischerweise einen maximalen axialen Abstand zueinander von 140-180 mm einhalten sollten. Da sich zwischen den Kurbelarmen ebenfalls noch die Antriebseinheit befindet, wird klar, dass diese möglichst schmal bauend ausgeführt sein sollte, um dem Fahrer ein auch über lange Strecken komfortables Fahrerlebnis zu ermöglichen. Dies bringt allerdings eine Reihe konstruktiver Probleme mit sich, da in den Antriebseinheiten notwendige Drehlager und Freiläufe für sich jeweils einen gewissen Platzbedarf mit sich bringen. Auch die Summiergetriebe und die Elektromotoren nehmen typischerweise einen nicht vernachlässigbaren Bauraum in den Antriebseinheiten, insbesondere in Richtung der Rotationsachse beispielsweise des Tretlagers oder des Hinterrades ein, der die Gesamtbreite der Antriebseinheiten über das gewünschte Ausmaß hinaus vergrößert.

Es ist daher die Aufgabe der vorliegenden Erfindung, eine Antriebseinheit anzugeben, die, insbesondere quer zur Fahrtrichtung des Fortbewegungsmittels, möglichst schmal ausgebildet ist. Gleichzeitig soll die Antriebseinheit flexibel steuerbar sein und den gesamten Funktionsumfang moderner Antriebseinheiten abdecken können.

Die Lösung gelingt mit einer Antriebseinheit gemäß dem unabhängigen Anspruch. Bevorzugte Weiterbildungen sind in den abhängigen Ansprüchen angegeben. Darüber hinaus erstreckt sich die Erfindung auch auf ein Fortbewegungsmittel mit einer derartigen Antriebseinheit.

Die erfindungsgemäße Antriebseinheit umfasst eine Eingangsantriebswelle zur Weiterleitung aus menschlicher Muskelkraft erzeugter beziehungsweise bereitgestellter Antriebsenergie. Die Eingangsantriebswelle kann also beispielsweise die Kurbelwelle eines Fahrrades sein oder drehfest mit dieser verbunden sein. Alternativ kann die Eingangsantriebswelle ebenfalls drehfest mit einem Zugmittelzahnrad, beispielsweise dem Kettenblatt, verbunden sein. Die Eingangsantriebswelle ist somit derart angeordnet, dass sie von einem Bediener beziehungsweise Fahrer des Fortbewegungsmittels mit menschlicher Muskelkraft, beispielsweise durch Pedalieren am Fahrrad, in Rotation versetzbar ist. Dies kann direkt oder indirekt erfolgen. Es ist insbesondere vorgesehen, dass dies in Kraftflussrichtung von der Einleitungsstelle menschlicher Muskelkraft in den gesamten Antriebsstrang kommend vor einem Elektromotor erfolgt.

Die erfindungsgemäße Antriebseinheit umfasst weiter eine Ausgangsabtriebswelle zur Abgabe von Antriebsenergie an eine Fahreinrichtung. Die Fahreinrichtung ist beispielsweise wenigstens ein Rad (oder ein Propeller bei Fortbewegungsmitteln im Wasser), welches durch die von der Ausgangsabtriebswelle übertragene Antriebsenergie in Rotation versetzt wird, wodurch das Fortbewegungsmittel fährt. Beispielsweise kann die Ausgangsabtriebswelle drehfest mit einem Zugmittelzahnrad, beispielsweise dem Kettenblatt, verbunden sein. Alternativ kann die Ausgangsabtriebswelle auch beispielsweise drehfest mit einem Nabengehäuse ausgebildet sein, welches die Rotationsbewegung, beispielsweise über Speichen, auf eine Fahreinrichtung überträgt. Die Ausgangsabtriebswelle überträgt ihre Rotation auf die Fahreinrichtung des Fortbewegungsmittels, weshalb die Antriebseinheit dazu ausgebildet ist, die Ausgangsabtriebswelle mit einer Rotation zu beaufschlagen, die einer gewünschten Fahrgeschwindigkeit des Fortbewegungsmittels entspricht. In Kraftflussrichtung von der Einleitungsstelle menschlicher Muskelkraft ist die Ausgangsabtriebswelle somit funktional zwischen der Eingangsantriebswelle und der von Antriebseinheit angetriebenen Fahreinrichtung angeordnet.

Entsprechend ist die Antriebseinheit derart ausgebildet, die Antriebsenergie von der Eingangsantriebswelle auf die Ausgangsabtriebswelle zu übertragen. Gleichzeitig ist es jedoch auch vorgesehen, dass die Antriebseinheit in einer Weise ausgebildet ist, dass sie die auf die Ausgangsabtriebswelle übertragene Drehzahl und das übertragene Drehmoment an aktuelle Anforderungen der Betriebssituation anpassen kann. Dazu umfasst die Antriebseinheit ein um eine Rotationsachse angeordnetes Antriebswellgetriebe mit einem ersten Wellgenerator, einem ersten Flexspline und einem Hohlrad. Bei der Rotationsachse kann es sich beispielsweise insbesondere um die Tretachse eines Tretlagers oder die Radachse einer Fahreinrichtung, insbesondere einer von der Antriebseinheit angetriebenen Fahreinrichtung, handeln. Ein Wellgetriebe ist ein Typ von Getriebe, das aufgrund der einfachen und schmalen Bauweise sowie der Robustheit und hohen Untersetzung für den vorliegenden Anwendungszweck besonders geeignet ist. Wellgetriebe an sich sind im Stand der Technik beschrieben und dem Fachmann bekannt, beispielsweise aus der DE 1 135 259 B. Sie können beispielsweise hohe Drehzahlen mit niedrigen Drehmomenten des Wellgenerators in niedrige Drehzahlen mit hohen Drehmomenten des Flexsplines und/oder des Hohlrades und umgekehrt übersetzen. Darüber hinaus umfasst die Antriebseinheit einen um die Rotationsachse angeordneten Antriebselektromotor mit einem Stator und einem Rotor, wobei Antriebsenergie des Antriebselektromotors über das Antriebswellgetriebe auf die Ausgangsabtriebswelle übertragbar ist. Der Antriebselektromotor kann daher zur Unterstützung des Fahrers beziehungsweise dessen menschlicher Muskelkraft eingesetzt werden, um elektromotorisch bereitgestellte Antriebsenergie auf die Ausgangsabtriebswelle zu übertragen und damit zur Fortbewegung des Fortbewegungsmittels beizutragen. Durch die vergleichsweise hohe Untersetzung des Wellgetriebes können die hohen Drehzahlen und niedrigen Drehmomente des Elektromotors in niedrige Drehzahlen mit hohen Drehmomenten umgewandelt werden, die zum Antrieb des Fortbewegungsmittels nutzbar sind. Hierfür ist der Antriebselektromotor bevorzugt antriebsmäßig mit dem Wellgenerator des Antriebswellgetriebes wirkverbunden. Mit anderen Worten ist der Rotor des Antriebselektromotors bevorzugt drehfest mit dem Wellgenerator verbunden oder gar einstückig mit diesem ausgebildet. Der Abtrieb des Antriebswellgetriebes wird vorliegend bevorzugt vom Hohlrad gebildet. Insbesondere ist das Hohlrad drehfest mit der Ausgangsabtriebswelle der Antriebseinheit verbunden.

Zusätzlich weist die erfindungsgemäße Antriebseinheit ein im Antriebsstrang zwischen der Eingangsantriebswelle und der Ausgangsabtriebswelle angeordnetes Variationswellgetriebe mit einem zweiten Wellgenerator, einem zweiten Flexspline und einem Hohlrad auf. Die erfindungsgemäße Antriebseinheit umfasst somit gleichzeitig zwei Wellgetriebe, die funktional jedoch verschiedenen Aufgaben wahrnehmen können, wir nachstehend noch näher erläutert. Das Variationswellgetriebe ist konkret derart angeordnet, dass es die aus menschlicher Muskelkraft stammende Antriebsenergie der Eingangsantriebswelle aufnimmt und zur Ausgangsabtriebswelle der Antriebseinheit weiterleitet. Beispielsweise ist hierzu die Eingangsantriebswelle drehfest (beispielsweise über einen später noch näher erläuterten Freilauf) mit einem langsam drehenden Getriebeteil des Variationswellgetriebes, beispielsweise dem Flexspline oder dem Hohlrad, verbunden. Bevorzugt ist es, dass die Eingangsantriebswelle drehfest mit dem Flexspline verbunden ist und die aus menschlicher Muskelkraft stammende Antriebsenergie somit über den Flexspline in das Variationswellgetriebe einbringt bzw. einleitet. In dieser bevorzugten Ausführungsform ist das Hohlrad drehfest mit der Ausgangsabtriebswelle verbunden, sodass die aus menschlicher Muskelkraft stammende Antriebsenergie über den Flexspline auf das Hohlrad übertragen wird und dadurch die Ausgangsabtriebswelle antreibt. Da der Flexspline über eine Verzahnung permanent in das Hohlrad eingreift, ist zunächst eine Drehzahl der Eingangsantriebswelle eins zu eins auf die Ausgangsabtriebswelle übertragbar. Allerdings kann beispielsweise ein Übersetzungsverhältnis zwischen Eingangsdrehzahl über den Flexspline und Ausgangsdrehzahl über das Hohlrad mit Hilfe des ferner vorhandenen Wellgenerators beeinflusst werden. Erfindungsgemäß ist für diesen Zweck ein, insbesondere um die Rotationsachse angeordneter, Variationselektromotor mit einem Stator und einem Rotor vorgesehen, dessen Antriebsenergie ebenfalls in das Variationswellgetriebe eingebracht wird. Diese Anordnung macht es ferner möglich, dass durch das Variationswellgetriebe die summierte Energie aus menschlicher Muskelkraft und dem Variationselektromotor auf die Ausgangsabtriebswelle übertragbar ist. Dies umfasst sowohl den Fall, dass der eingehenden Energie aus menschlicher Muskelkraft zur Ausgangsabtriebswelle hin zusätzliche Energie hinzugefügt wird, als auch den Fall, dass der Variationselektromotor der eingehenden aus menschlicher Muskelkraft erzeugten Energie entgegenwirkt und somit zur Ausgangsabtriebswelle hin Antriebsenergie abgezogen wird. Insbesondere ist der Variationselektromotor mit dem Wellgenerator des Variationswellgetriebes wirkverbunden. Beispielsweise ist der Rotor des Variationselektromotors drehfest mit dem Wellgenerator ausgebildet. Die vom Variationselektromotor bereitgestellte Antriebsenergie wird daher über den Wellgenerator ebenfalls auf das Hohlrad des Variationswellgetriebes und insbesondere auf die Ausgangsabtriebswelle übertragen. Das Variationswellgetriebe übersetzt das Drehzahlverhältnis von der Eingangsantriebswelle zur Ausgangsabtriebswelle und/oder summiert dabei die Antriebsenergie aus menschlicher Muskelkraft und diejenige aus dem Variationselektromotor. Bevorzugt ist das Variationswellgetriebe und/oder der Variationselektromotor um die Rotationsachse angeordnet, wodurch sich eine kompakte Bauweise bei vorteilhaftem Kraftfluss ergibt.

Bei der erfindungsgemäßen Antriebseinheit sind das Hohlrad des Antriebswellgetriebes und das Hohlrad des Variationswellgetriebes drehfest zueinander ausgebildet. Dies kann durch Verbindungselemente erreicht werden, die die beiden Hohlräder drehfest miteinander verbinden, beispielsweise Fixierstifte oder ähnliches. Es ist aber auch möglich und vorliegend auch bevorzugt, die beiden Hohlräder einstückig miteinander auszubilden. In dieser Ausführungsform ist somit eine Hohlradeinheit vorgesehen, die in Axialrichtung der Rotationsachse zwei zueinander beabstandete Innenverzahnungen aufweist, einmal für den Eingriff des ersten Flexsplines und einmal für den Eingriff des zweiten Flexsplines. Die beiden Innenverzahnungen können in Axialrichtung zueinander abgegrenzt sein oder aber auch in Axialrichtung unmittelbar ineinander übergehen. Diese zueinander drehfeste Ausbildung der beiden Hohlräder ermöglicht es, dass an dieser Stelle die summierte Antriebsenergie aus menschlicher Muskelkraft, dem Antriebselektromotor und dem Variationselektromotor auf die Ausgangsabtriebswelle übertragen wird. Diese Hohlradeinheit bildet somit den Summierpunkt der beiden Wellgetriebe der Antriebseinheit zur Ausgangsabtriebswelle hin. Insbesondere weisen beide Hohlräder eine Innenverzahnung auf, die komplementär zu einer Außenverzahnung des jeweiligen Flexsplines ausgebildet ist (mit der für Wellgetriebe typischen gegenüber der Außenverzahnung des Flexsplines erhöhten Zähneanzahl der Innenverzahnung des Hohlrades). Die beiden Wellgetriebe der Antriebseinheit sind daher über dieses gemeinsame Hohlrad miteinander wirkverbunden. Insbesondere nutzen die beiden Wellgetriebe das gemeinsame Hohlrad jeweils als Abtrieb beziehungsweise als Getriebeausgang, wodurch das Hohlrad und damit ebenfalls die Ausgangsabtriebswelle mit der gesamten resultierenden Antriebsenergie beziehungsweise Antriebsleistung der beiden Elektromotoren und der menschlichen Muskelkraft beaufschlagt wird. Die Erfindung nutzt also gemäß einem ersten Kerngedanken zwei Wellgetriebe, über die die summierte Antriebsenergie beziehungsweise Antriebsleistung der beiden Elektromotoren und des Fahrers des Fortbewegungsmittels auf die miteinander in Wirkverbindung stehenden Hohlräder beziehungsweise auf das gemeinsame Hohlrad und von hier auf die Ausgangsabtriebswelle übertragen wird. Dies ermöglicht eine besonders schmale Konstruktion der Antriebseinheit. Die Nutzung eines gemeinsamen Hohlrades oder zweier drehfest zueinander ausgebildeten Hohlräder zweier Getriebe als Summierpunkt und/oder Getriebeausgang bzw. Getriebeabtrieb, wie vorstehend beschrieben, ist grundsätzlich bei jedem Antrieb mit zwei Getrieben hilfreich, um axial Bauraum zu sparen, beispielsweise unabhängig von den verwendeten Getriebetypen, solange diese über ein Hohlrad abtreiben können, insbesondere zusätzlich bei der vorstehend beschriebenen Konfiguration der Motoren. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden könnte.

Beim Antriebselektromotor und/oder beim Variationselektromotor handelt es sich bevorzugt um Synchronmotoren, insbesondere Dreiphasen-Synchronmotoren, bevorzugt in Außenläufer-Bauweise. Diese zeichnen sich in der durch die Erfindung beschriebenen Ausführungsform durch besonders schmale Abmessungen aus.

Je nach Drehrichtung des Variationselektromotors kann dieser die vom Fahrer über die Eingangsantriebswelle eingebrachte Drehzahl bei der Übertragung auf die Ausgangsabtriebswelle unterschiedlich übersetzen. Durch diese Übersetzung wird eine Geschwindigkeitsvariation der Ausgangsabtriebswelle gegenüber der Eingangsantriebswelle erreicht. Beispielsweise kann die Ausgangsabtriebswelle gegenüber der Eingangsantriebswelle beschleunigt oder abgebremst werden, wobei der Variationselektromotor auch in der Lage ist, eine eingestellte Übersetzung ohne weiteres Beschleunigen oder Abbremsen langanhaltend beizubehalten. Dies wird bevorzugt dazu genutzt, dass das Variationswellgetriebe, insbesondere mit dem Variationselektromotor, ein stufenloses Getriebe zwischen der Eingangsantriebswelle und der Ausgangsabtriebswelle ausbildet. Durch die Ansteuerung der Drehzahl des Variationselektromotors kann die Drehzahl der Ausgangsabtriebswelle gegenüber der Eingangsantriebswelle in einem beliebigen Maß ins Schnelle oder ins Langsame übersetzt werden. Im Zusammenspiel mit einer später noch näher erläuterten Steuereinheit kann daher in jeder Fahrsituationen eine für den Fahrer angenehme Pedalgeschwindigkeit und ein angenehmer Pedalwiderstand eingestellt werden, ohne an vorgegebene, stufenweise Gänge gebunden zu sein.

Gemäß einer bevorzugten Ausführungsform der Erfindung ist vorgesehen, dass wenigstens einer der Flexsplines als eine sich in Richtung der Rotationsachse erstreckende Hülse ausgebildet ist. Bevorzugt sind beide Flexsplines jeweils als sich in Richtung der Rotationsachse erstreckende Hülsen ausgebildet. Die jeweilige Hülse ist auf einer axialen Seite mit einem Drehlager verbunden, welche die Hülse beispielsweise gegenüber einem ortsfesten beziehungsweise statischen Gehäuse rotierbar lagert. Zur anderen axialen Seite weist die jeweilige Hülse einen Eingriffsbereich für den Wellgenerator und insbesondere auch die Außenverzahnung für das Hohlrad auf. Zwischen dem Drehlager und dem Wellgenerator in Richtung der Rotationsachse gesehen ist ein Hülseninnenraum vorhanden. Der Hülseninnenraum beschreibt also ein vom Flexspline und insbesondere der Hülse, insbesondere von der Rotationsachse aus gesehen in Radialrichtung, umschlossenes Volumen. Die Konstruktion des Flexsplines mit Hülse als Flexsplinetopf ist für dessen Biegungs- und Verwindungseigenschaften und damit der fehlerfreien Funktion des Wellgetriebes hilfreich. Der Hülseninnenraum wird bei der Erfindung allerdings bevorzugt genutzt, um auf sehr effektive Weise Bauraum einzusparen. Es ist daher insbesondere vorgesehen, dass wenigstens einer der, bevorzugt beide, Elektromotoren in Axialrichtung der Rotationsachse zumindest teilweise, bevorzugt vollständig, im Hülseninnenraum des dem jeweiligen Elektromotor zugeordneten Wellgetriebes angeordnet ist. Mit anderen Worten ist beispielsweise vorgesehen, dass der Antriebselektromotor in Axialrichtung der Rotationsachse zumindest teilweise, bevorzugt vollständig, im Hülseninnenraum des Antriebswellgetriebes angeordnet ist, und/oder, dass der Variationselektromotor in Axialrichtung der Rotationsachse zumindest teilweise, bevorzugt vollständig, im Hülseninnenraum des Variationswellgetriebes angeordnet ist. Der jeweilige Elektromotor wird also bevorzugt in Radialrichtung von der jeweiligen Hülse des Flexsplines zumindest teilweise und bevorzugt vollständig umschlossen. Die jeweilige Angabe bezüglich der Elektromotoren bezieht sich insbesondere auf die axiale Erstreckung des Rotors und/oder Stators des jeweiligen Elektromotors entlang der Rotationsachse. Gemäß einer bevorzugten Ausführungsform ist daher der Antriebselektromotor und/oder der Variationselektromotor über die gesamte axiale Erstreckung seines Rotors und/oder Stators entlang der Rotationsachse in Radialrichtung der Rotationsachse von der Hülse des Flexsplines umgeben. Auf diese Weise wird der Hülseninnenraum konstruktiv für die Unterbringung wenigstens eines Elektromotors, bevorzugt beider Elektromotoren, genutzt, wodurch Bauraum eingespart wird. Besonders effizient gelingt dies dadurch, wenn die beiden Flexsplinehülsen mit ihren Außenverzahnung in Axialrichtung der Rotationsachse einander zugewandt angeordnet sind.

Eine weitere bevorzugte Ausgestaltung der Erfindung betrifft ebenfalls eine möglichst platzsparende Anordnung der Elektromotoren. Hierfür ist es bevorzugt vorgesehen, dass der Wellgenerator, der Flexspline und das Hohlrad des Antriebswellgetriebes und/oder des Variationswellgetriebes jeweils in einer senkrecht zur Rotationsachse liegenden Getriebeebene einander überlappend angeordnet sind. Der Wellgenerator, der Flexspline und das Hohlrad des jeweiligen Wellgetriebes sind also in Radialrichtung der Rotationsachse aufeinander folgend, insbesondere in dieser Reihenfolge von innen nach außen und/oder in Radialrichtung insbesondere fluchtend, angeordnet. Darüber hinaus ist der Flexspline, insbesondere die Hülse des Flexsplines, in einer senkrecht zur Rotationsachse liegenden Lagerebene gegenüber einem Gegenlager rotierbar gelagert. Das Gegenlager bezeichnet im Kontext der vorliegenden Anmeldung beispielsweise einen ortsfesten beziehungsweise statischen Teil der Antriebseinheit und ist beispielsweise gemeinsam mit einem Gehäuse oder Gehäuseteil feststehend ausgebildet. Bevorzugt ist nun der Antriebselektromotor und/oder der Variationselektromotor zumindest teilweise und bevorzugt vollständig zwischen der Getriebeebene und der Lagerebene angeordnet. Auch dies bezieht sich insbesondere auf die axiale Erstreckung des Rotors und/oder Stators des jeweiligen Elektromotors entlang der Rotationsachse.

Damit die Elektromotoren der erfindungsgemäßen Antriebseinheit insbesondere von einer nachstehend noch näher erläuterten Steuereinheit besonders präzise angesteuert werden können, ist es bevorzugt vorgesehen, dass wenigstens ein, insbesondere berührungsfreier, Drehzahl- und/oder Drehwinkelsensor, insbesondere Hallsensor, am Antriebselektromotor und/oder am Variationselektromotor vorgesehen ist. Um die entsprechenden Sensoren möglichst platzsparend in der Antriebseinheit unterzubringen, ist es darüber hinaus ergänzend oder alternativ vorgesehen, dass der wenigstens eine, insbesondere berührungsfreie, Drehzahl- und/oder Drehwinkelsensor insbesondere im Hülseninnenraum des Flexsplines angeordnet ist. Auch der jeweilige Sensor ist in Radialrichtung der Rotationsachse daher bevorzugt von der Hülse des Flexsplines umgeben. Darüber hinaus befindet sich der jeweilige Sensor bevorzugt ebenfalls zwischen der Getriebeebene und der Lagerebene.

Aufgrund der vielen zueinander rotierbaren Komponenten der Antriebseinheit und der Rotierbarkeit verschiedener Komponenten gegenüber dem feststehenden Gehäuse, sind eine Vielzahl von Drehlagern, beispielsweise (Rillen-)Kugellagern, notwendig, um diese Komponenten, insbesondere um die Rotationsachse, gegeneinander rotierbar anzuordnen. Die Anordnung erfolgt dabei bevorzugt in der Weise, dass diese zueinander rotierbaren Element allesamt um eine gemeinsame Rotationsachse, insbesondere die Tretlagerachse oder die Drehachse einer Fahreinrichtung, rotierbar sind. Herausfordernd in der konkreten konstruktiven Umsetzung hieran ist, dass diese Drehlager, um ihre jeweilige Funktion erfüllen zu können, naturgemäß eine minimale Breite aufweisen, die, insbesondere über viele Drehlager in Axialrichtung kumuliert, einen signifikanten Beitrag zur Gesamtbreite der Antriebseinheit leisten. Die Erfindung sieht daher ebenfalls vor, durch die geschickte Anordnung der Drehlager Bauraum in axialer Richtung der Rotationsachse einzusparen. So ist es beispielsweise bevorzugt vorgesehen, dass ein Drehlager für die Ausgangsabtriebswelle und ein Drehlager für die Eingangsantriebswelle in einer gemeinsamen senkrecht zur Rotationsachse liegenden Wellenlagerebene angeordnet sind. Diese beiden Drehlager sind in Radialrichtung zur Rotationsachse somit bevorzugt übereinander bzw. einander überlappend angeordnet. Besonders bevorzugt ist es, dass die beiden Drehlager als Kugellager mit gleicher axialer Erstreckung entlang der Rotationsachse ausgebildet sind und sich in Radialrichtung der Rotationsachse vollständig überlappen. Die beiden Drehlager werden also nicht in Axialrichtung nebeneinander sondern in Radialrichtung nebeneinander angeordnet, so dass die Breite eines der Drehlager entlang der Rotationsachse eingespart wird. Diese Anordnung der Drehlager für die Ausgangsabtriebswelle und für die Eingangsantriebswelle ist grundsätzlich bei jedem Antrieb hilfreich, um axial Bauraum zu sparen, beispielsweise unabhängig von den verwendeten Getriebetypen und der Konfiguration der Motoren. Dies betrifft insbesondere die Anwendung bei einem elektromotorisch unterstützten Fahrrad, wie ein E-Bike oder ein Pedelec. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden könnte.

Um die axiale Breite beziehungsweise Ausdehnung der Antriebseinheit zu begrenzen, ist es bekannt, beispielsweise mehrere Getriebe oder mehrere Motoren nicht in Axialrichtung, sondern in Radialrichtung bezüglich der Rotationsachse nebeneinander anzuordnen. Um die Ausdehnung der Antriebseinheit quer zur Fahrtrichtung des Fortbewegungsmittels zu begrenzen, wurde mit anderen Worten eine Ausdehnung in Fahrtrichtung oder in Vertikalrichtung in Kauf genommen. Das Ziel der vorliegenden Erfindung ist nun allerdings, dass eine derartige Vergrößerung der Antriebseinheit in Fahrtrichtung und/oder in Vertikalrichtung vermieden wird. Es ist daher bevorzugt vorgesehen, dass die beiden Elektromotoren und/oder die beiden Wellgetriebe koaxial zueinander um die Rotationsachse angeordnet sind. Die beiden Elektromotoren und/oder die beiden Wellgetriebe weisen also insbesondere dieselbe Rotationsachse auf. Eine derartige Anordnung ist nicht nur besonders kompakt, sondern hat ebenfalls Vorteile bezüglich des Kraftflusses durch den Antriebsstrang.

Dadurch, dass die beiden Wellgetriebe zumindest funktional oder auch baulich ein gemeinsames Hohlrad aufweisen, ist es besonders platzsparend, wenn die beiden Wellgetriebe nah aneinander angeordnet sind. Es ist daher bevorzugt, die beiden Wellgetriebe benachbart zueinander bezüglich der Axialrichtung der Rotationsachse auszubilden. In Axialrichtung weiter nach außen schließen sich dann bevorzugt direkt die Elektromotoren an. Noch weiter in Axialrichtung nach außen folgen dann die Drehlager der Flexsplines zu einem stationären Gegenlager, die beispielsweise ebenfalls Freiläufe umfassen können. Insgesamt ist es daher bevorzugt vorgesehen, dass die Wellgetriebe und die Elektromotoren, und insbesondere die Drehlager der Flexsplines zu einem stationären Gegenlager, und insbesondere ebenfalls Freiläufe zwischen den Flexsplines und einem statischen Gehäuseteil, zueinander symmetrisch bezüglich einer senkrecht zur Rotationsachse verlaufenden Symmetrieebene ausgebildet und angeordnet sind. Die genannten Bauteile sind somit bevorzugt spiegelsymmetrisch bezüglich der Symmetrieebene entlang der Rotationsachse angeordnet. Dies bringt zudem den Vorteil mit sich, dass zu einem hohen Grad hinsichtlich des Variationswellgetriebes und des Antriebswellgetriebes auf doppelt verwendete bzw. zueinander baugleiche Baukomponenten zurückgegriffen werden kann, so dass die Teilediversität der Antriebseinheit in vorteilhafter Weise vergleichsweise gering gehalten werden kann.

Wie bereits erläutert, werden erfindungsgemäß die Hohlwellen der Wellgetriebe als Getriebeausgang bzw. Abtrieb genutzt. Die aus menschlicher Muskelkraft stammende Antriebsenergie kann daher über den Flexspline in das Variationswellgetriebe eingebracht werden. Bevorzugt ist vorgesehen, dass die Eingangsantriebswelle zumindest in einer Drehrichtung drehfest mit dem Flexspline des Variationswellgetriebe verbunden ist und die aus menschlicher Muskelkraft stammende Energie über den Flexspline in das Variationswellgetriebe eingebracht wird. Die Eingangsantriebswelle ist dazu bevorzugt über einen Freilauf mit dem Flexspline des Variationswellgetriebes verbunden, wobei der Freilauf insbesondere in einer Vorwärts-Drehrichtung beziehungsweise Vorwärts-Fahrtrichtung der Eingangsantriebswelle sperrt beziehungsweise eine drehfeste Verbindung herstellt und dadurch die entsprechende Rotationsbewegung über den Freilauf und den Flexspline auf das Hohlrad überträgt. Der Freilauf ermöglicht es darüber hinaus, beispielsweise frei rückwärts treten zu können, oder, dass die Ausgangsabtriebswelle durch die beiden Elektromotoren schneller rotiert wird als die von einem Fahrer gedrehte Eingangsantriebswelle.

Ein weiterer Freilauf ist bevorzugt am Flexspline des Antriebswellgetriebes angeordnet. Insbesondere ist der Flexspline des Antriebswellgetriebes über einen Freilauf an einem stationären Gehäuseteil gelagert. Dieser Freilauf dreht insbesondere dann frei, wenn der Flexspline in Vorwärts-Fahrtrichtung rotiert, und blockiert insbesondere dann, wenn der Flexspline entgegen der Vorwärts-Fahrtrichtung rotieren würde. Fährt das Fortbewegungsmittel vorwärts, so rotieren die Ausgangsabtriebswelle und das gemeinsame Hohlrad vorwärts. Dadurch wird auch der Flexspline des Antriebswellgetriebes vorwärts mitgedreht. Da der Freilauf in dieser Rotationsrichtung frei dreht, muss nicht der Rotor des Antriebselektromotors mitgeschleppt werden. Wird daher beispielsweise ohne Unterstützung durch den Elektromotor, beispielsweise aus reiner menschlicher Muskelkraft, gefahren, so kann dies mit niedrigem Pedalwiderstand erfolgen. Wird dagegen der Antriebselektromotor betrieben, um ein Unterstützungsdrehmoment auf das Hohlrad und damit die Ausgangsabtriebswelle zu übertragen, so wird der Flexspline über den Freilauf am stationären Gehäuse abgestützt, sodass die Antriebsenergie vom Antriebselektromotor über den Wellgenerator und den Flexspline auf das Hohlrad und damit die Ausgangsabtriebswelle übertragen wird.

Wie bereits beschrieben, ist der Freilauf bevorzugt derart am Flexspline des Antriebswellgetriebes angeordnet, dass er dann freiläuft, wenn das Fortbewegungsmittel vorwärts fährt und der Antriebselektromotor keine oder nur eine geringe Antriebsenergie aufbringt. In diesen Situationen kann es gewünscht sein, den Antriebselektromotor als Generator zur Rekuperation von kinetischer Energie zu betreiben. Damit dies gelingt, ist es bevorzugt vorgesehen, dass der Freilauf schaltbar ausgebildet ist zwischen einer in eine Drehrichtung freilaufenden Schaltstellung und einer in diese Drehrichtung greifenden bzw. nicht freilaufenden Schaltstellung. In dieser Drehrichtung wirkt der Freilauf somit mit anderen Worten als schaltbare Kupplung. Alternativ kann auch eine separate Kupplungseinheit vorgesehen sein, die eine drehfeste Verbindung zwischen dem Freilauf und einem stationären Gehäuseteil herstellen kann, wodurch der Freilauf ebenfalls umgangen wird und dasselbe Resultat eintritt. Auf diese Weise ist es möglich, dass der Antriebselektromotor als Generator betreibbar ist, der Antriebsenergie vom Hohlrad aufnimmt und in elektrische Energie umwandelt. Wird der Freilauf in seine nicht freilaufende Position geschaltet, so bedeutet dies, dass er auch in Vorwärts-Drehrichtung eine drehfeste Verbindung zwischen dem Flexspline und einem stationären Gehäuseteil herstellt. Dadurch wird der Flexspline blockiert und kann nicht rotieren. Auf diese Weise wird Antriebsenergie vom Hohlrad auf den Wellgenerator und damit den Antriebselektromotor übertragen, der dann als Generator wirkt und diese Antriebsenergie in elektrische Energie umwandelt, beispielswiese zum Aufladen eines Speichers für elektrische Energie. Auf diese Weise kann das Fortbewegungsmittel somit insbesondere auch unter Wiedergewinnung von elektrischer Energie abgebremst werden. Diese Nutzung eines schaltbaren Freilaufs und/oder einer separaten Kupplungseinheit zum Betrieb des Antriebselektromotors als Generator ist grundsätzlich mit jedem Antrieb mit einem Elektromotor realisierbar, beispielsweise unabhängig von den verwendeten Getriebetypen und der Konfiguration des einen oder mehrerer Motoren.

Eine besondere Anwendung des beschriebenen schaltbaren Freilaufes am Flexspline des Antriebswellgetriebes ergibt sich beispielsweise bei Pedelecs: Nach gesetzlichen Vorschriften darf das Fahren mit einem Pedelec nur bis zu einer Maximalgeschwindigkeit, beispielsweise 25 km/h (bei S-Pedelecs 45 km/h), elektromotorisch unterstützt werden. Ab dieser Maximalgeschwindigkeit muss die von der Antriebseinheit elektromotorisch eingebrachte Leistung gleich null sein. Dennoch ist es bevorzugt, dass der Fahrer auch über dieser Geschwindigkeitsgrenze hinaus durch menschliche Muskelkraft noch schneller fahren kann, wozu eine Übersetzung der Rotation der Eingangsantriebswelle ins Schnelle auf die Ausgangsabtriebswelle gewünscht ist. Bei der erfindungsgemäßen Antriebseinheit bedeutet dies, dass der Variationselektromotor, d.h. der Elektromotor des Variationswellgetriebes, der für die Einstellung der Übersetzung von der Eingangsgetriebewelle hin zur Ausgangsgetriebewelle verantwortlich ist, ebenfalls Antriebsenergie über das Variationswellgetriebe auf das Hohlrad und damit die Ausgangsabtriebswelle übertragen muss. Um hierdurch die gesetzlichen Vorschriften nicht zu verletzen, ist es nun bevorzugt vorgesehen, dass beim Überschreiten der gesetzlich vorgegebenen Maximalgeschwindigkeit der Antriebselektromotor als Generator betrieben wird. Insbesondere wird der Antriebselektromotor dann derart betrieben, dass er als Generator genau diejenige Antriebsenergie beziehungsweise Antriebsleistung vom Hohlrad abzweigt und in elektrische Energie umwandelt, die der Antriebsenergie beziehungsweise Antriebsleistung entspricht, die der Variationselektromotor auf das Hohlrad aufbringt. Eine entsprechende "negative" Antriebsleistung des Antriebselektromotors könnte alternativ auch durch einen Antrieb des Antriebselektromotors in entgegengesetzter Drehrichtung zum Variationselektromotor erreicht werden, beispielsweise bei dem Variationselektromotor entsprechender Drehzahl und/oder entsprechenden Drehmoment. Wichtig ist, dass in diesem Betriebszustand die summierte Antriebsenergie beziehungsweise Antriebsleistung der beiden Elektromotoren insgesamt null ergibt, so dass das Pedelec rein aus menschlicher Muskelkraft angetrieben wird und daher die gesetzlichen Anforderungen erfüllt sind. Insgesamt ist es daher bevorzugt, dass der Antriebselektromotor ab einer maximalen Fahrgeschwindigkeit des Fortbewegungsmittels mit gegenüber dem Variationselektromotor entgegengesetzter und betragsmäßig übereinstimmender Antriebsleistung betrieben wird - sei es als Motor oder als Generator -, so dass die gesamte von den Elektromotoren auf die Ausgangsabtriebswelle aufgebrachte Antriebsleistung gleich null ist. Die entsprechende Ansteuerung der Elektromotoren erfolgt über die nachstehend noch näher beschriebene Steuereinheit. Ferner ist ein geeignetes Sensorsystem vorgesehen, das die für die Steuereinheit relevanten Betriebsdaten beschafft, wie beispielsweise die aktuelle Fahrgeschwindigkeit des über die Antriebseinheit angetriebenen Fahrzeugs etc. Die Antriebseinheit sorgt hierbei ausschließlich für ein gewünschtes Übersetzungsverhältnis zwischen Eingangsantriebswelle und Ausgangsabtriebswelle, ohne eine in Vorwärtsrichtung des Fahrzeugs wirkende unterstützende Antriebsenergie beziehungsweise Antriebsleistung einzubringen.

Wie bereits zuvor für die Drehlager ausgeführt, besitzen auch die Freiläufe eine minimal notwendige axiale Erstreckung entlang der Rotationsachse. Es ist daher ebenfalls vorteilhaft, die Freiläufe mit jeweils zumindest einem Drehlager radial zur Rotationsachse überlappend anzuordnen, um deren gemeinsame Axialerstreckung insgesamt zu verkleinern. Es ist daher bevorzugt vorgesehen, dass ein Drehlager zwischen einem Gegenlager und dem Flexspline des Antriebswellgetriebes in einer senkrecht zur Rotationsachse liegenden Lagerebene mit einem Freilauf überlappend angeordnet ist. Ergänzend oder alternativ ist vorgesehen, dass ein Drehlager zwischen einem Gegenlager und dem Flexspline des Variationswellgetriebes in einer senkrecht zur Rotationsachse liegenden Lagerebene mit einem Freilauf überlappend angeordnet ist. Insbesondere ist bevorzugt, dass sich die Drehlager und die Freiläufe mindestens zur Hälfte, bezogen auf ihre jeweilige Axialerstreckung entlang der Rotationsachse, bevorzugt mindestens zu zwei Dritteln und ganz besonders bevorzugt vollständig, überlappen. Das Gegenlager ist ein stationäres, also nicht mitrotierendes, Teil und beispielsweise mit anderen, stationären Gehäuseteilen der Antriebseinheit drehfest verbundenen.

Eine weitere Einsparung von axialer Breite der Antriebseinheit gelingt dadurch, dass bevorzugt ein Drehlager in einer senkrecht zur Rotationsachse liegenden Ebene zusammen mit einem Wellgetriebe liegt. Das Drehlager überlappt also in Radialrichtung der Rotationsachse mit dem Wellgetriebe. Beispielsweise kann es sich um das Drehlager des Rotors eines Elektromotors handeln. Derartige Drehlager sind sowieso notwendig und müssen daher platzsparend platziert werden. Gemäß einer bevorzugten Ausführungsform der Erfindung ist daher vorgesehen, dass der Wellgenerator, der Flexspline und das Hohlrad des Antriebswellgetriebes und/oder des Variationswellgetriebes in einer senkrecht zur Rotationsachse liegenden Getriebeebene zusammen mit einem Drehlager für den Rotor des Antriebselektromotors und/oder des Variationselektromotors, insbesondere bezüglich eines Gegenlagers, angeordnet sind. In dieser Ausführungsform ist das Drehlager des Rotors des Elektromotors also in das Wellgetriebe hinein verschoben und insbesondere mit diesem verschachtelt. Besonders bevorzugt hat das entsprechende Drehlager eine axiale Erstreckung, die der axialen Erstreckung weiterer Komponenten des Wellgetriebes entspricht, beispielsweise dem Wellgenerator oder dem Drehlager, insbesondere Kugellager, zwischen dem Wellgenerator und dem Flexspline. Bevorzugt überlappt sich das Drehlager mit diesen Elementen vollständig, gesehen in Radialrichtung und bezogen auf die axiale Erstreckung.

Vorstehend wurden bereits einige senkrecht zur Rotationsachse ausgerichteten Ebenen beschrieben, in denen jeweils verschiedene Komponenten der Antriebseinheit in radialer Überlappung zur Verringerung von axialer Ausdehnung der Antriebseinheit entlang der Rotationsachse angeordnet sind. Eine weitere derartige Ebene ist die Elektroniklagerebene, die ebenfalls senkrecht zur Rotationsachse ausgerichtet ist und in der ein Drehlager, insbesondere Kugellager, und eine Steuereinheit angeordnet sind. Das Drehlager ist beispielsweise zwischen dem stationären Gehäuse und der Kurbelwelle angeordnet, falls die Antriebseinheit um die Kurbelwelle angeordnet ist, oder das Drehlager ist zwischen einem stationären Gehäuseanteil, beispielsweise Achskörper, und dem rotierenden Nabengehäuse angeordnet, falls die Antriebseinheit an einer Radnabe angeordnet ist. Auf die elektronische Steuereinheit wird nachstehend noch näher eingegangen. Bezüglich einer optimalen Anordnung der Komponenten der Antriebseinheit zueinander ist es bevorzugt vorgesehen, dass in Richtung entlang der Rotationsachse die Wellenlagerebene, die Lagerebene des Flexsplines des Variationswellgetriebes, die Getriebeebene des Variationswellgetriebes, die Symmetrieebene, die Getriebeebene des Antriebswellgetriebes, die Lagerebene des Flexsplines des Antriebswellgetriebes und insbesondere auch die Elektroniklagerebene aufeinanderfolgend angeordnet sind. Hieraus ergibt sich eine besonders platzsparende Anordnung der jeweiligen Komponenten.

Wie vorstehend bereits angedeutet, kann die Antriebseinheit beispielsweise bei einem Fahrrad wohl in der Mitte des Rahmens im Bereich der Pedale, als auch an einer der Radnaben angeordnet sein. In einer bevorzugten Ausführungsform ist die Antriebseinheit als Mittelantriebseinheit ausgebildet, wobei insbesondere die Rotationsachse koaxial mit einer Tretachse angeordnet ist. Die Antriebseinheit ist dabei beispielsweise zwischen den Pedalen und insbesondere zwischen den Pedalkurbeln angeordnet. Die Antriebseinheit wird in dieser Anordnung von einer drehenden Achse, insbesondere der Kurbelwelle, durchdrungen und weist ein stationäres Gehäuse auf. In einer bevorzugten Alternative ist die Antriebseinheit als Nabenantriebseinheit ausgebildet, wobei insbesondere die Rotationsachse koaxial mit einer Radachse angeordnet ist. Die Antriebseinheit ist also an einer Radnabe angeordnet, beispielsweise am Hinterrad. In diesem Fall ist die Antriebseinheit von einem feststehenden Achskörper durchdrungen und weist ein rotierendes Nabengehäuse auf, welches die Rotationsbewegung über Speichen auf das Rad überträgt. Besonders bevorzugt ist die Antriebseinheit als Mittelantriebseinheit ausgebildet, da durch die zentrale Lage am Rahmen beispielsweise eines Fahrrades eine besonders gute Gewichtsverteilung mit tiefem und entlang der Längssachse mittig angeordnetem Schwerpunkt erreicht wird.

Es ist immer vorteilhaft, die axiale Erstreckung der Antriebseinheit möglichst gering auszubilden. Von besonderem Vorteil ist dies allerdings ebenfalls bei der Ausbildung der Antriebseinheit als Mittelantriebseinheit, d.h. im Bereich der Tretlagerachse. Wie eingangs erwähnt, wird angestrebt, dass die Kurbelarme der Pedale des Fahrzeugs aufgrund der durchschnittlichen menschlichen Anatomie idealerweise einen Abstand von 140-180 mm zueinander aufweisen. Dies kann mit den vorstehend beschriebenen Maßnahmen eingehalten werden. Je nachdem, wie konsequent die Maßnahmen umgesetzt werden, können sogar noch engere Abmaßungen erreicht werden. So ist es bevorzugt, dass die Erstreckung der Antriebseinheit entlang der Rotationsachse maximal 150 mm, bevorzugt maximal 135 mm, besonders bevorzugt maximal 120 mm und insbesondere beispielsweise maximal 100 mm, beträgt. Die Kurbelarme der Pedale wiederum sollten bevorzugt maximal 200 mm, besonders bevorzugt maximal 170 mm und ganz besonders bevorzugt maximal 140 mm voneinander beabstandet sein. Auf diese Weise kann auch bei der Ausbildung der Antriebseinheit als Mittelantriebseinheit ein angenehmes und anatomisch korrektes Pedalieren ermöglicht werden.

In einer bevorzugten Ausführungsform ist eine Steuereinheit zur Steuerung des Antriebselektromotors und/oder das Variationselektromotors vorgesehen. Die elektronische Steuereinheit steuert insbesondere die Drehzahl und/oder die Drehrichtung und/oder das Drehmoment der Elektromotoren einzeln und unabhängig voneinander an. Die Steuereinheit steuert dabei beispielsweise ebenfalls die Einstellung des durch die Antriebseinheit bereitgestellten stufenlosen Getriebes derart, dass unabhängig von der aktuellen Fahrgeschwindigkeit immer ein angenehmes Pedalieren möglich ist. Beispielsweise steuert die Steuereinheit die Elektromotoren über ein hinterlegtes Drehfeld, beispielsweise Dreiphasendrehfeld. In derartigen Drehfeldern sind sowohl das Drehzahl- als auch das Drehmomentverhalten der Motoren hinterlegt. Die entsprechende Ansteuerung der Elektromotoren gehört zum Stand der Technik und ist dem Fachmann bekannt, weshalb hier nicht näher auf diese eingegangen wird. Die Steuereinheit kann eine ganze Reihe von verschiedenen Merkmalen und Funktionen aufweisen, wie nachstehend erläutert.

Rein baulich ist die Steuereinheit in die Antriebseinheit integriert. Sie liegt in der bereits beschriebenen senkrecht zur Rotationsachse ausgerichteten Elektroniklagerebene, beispielsweise zusammen mit einem Drehlager für eine Kurbelwelle. Sie ist daher nicht einfach außen an die Antriebseinheit angesetzt, sondern mit den Getriebeteilen der Antriebseinheit verschachtelt, was zu einer effizienten Nutzung des Bauraumes beiträgt.

Zur Steuerung der Funktionen der Antriebseinheit müssen verschiedene Größen bestimmt werden, die den aktuellen Betriebszustand widerspiegeln, und die die Steuereinheit bei der Steuerung der Elektromotoren berücksichtigt. So ist die Steuereinheit beispielsweise mit einem Drehwinkel- und/oder Drehzahl- und/oder Drehmomentsensor an der Eingangsantriebswelle verbunden. Die Eingangsantriebswelle wird im Betrieb vom Fahrer, beispielsweise durch Treten der Pedale, angetrieben, sodass die entsprechenden Größen von der Steuereinheit genutzt werden können, um beispielsweise den Willen des Fahrers zu ergründen, der beispielsweise mehr tritt, wenn er beschleunigen möchte. Darüber hinaus ist die Steuereinheit bevorzugt mit einem Fahrgeschwindigkeitssensor verbunden, der insbesondere in oder an der Nabe des Hinterrades, am Hinterrad beziehungsweise dessen Speichen oder an der Bremsscheibe angeordnet ist, und der die Fahrgeschwindigkeit des Fortbewegungsmittels insgesamt bestimmt. Eine bevorzugte Ausführungsform sieht vor, dass der Fahrgeschwindigkeitssensor in die Antriebseinheit integriert und zusammen mit dieser am Fortbewegungsmittel angeordnet ist. In diesem Fall wird die Fahrgeschwindigkeit beispielsweise an der Ausgangsabtriebswelle bestimmt. Dies ist insbesondere dann möglich, wenn das angetriebene Rad des Fortbewegungsmittels, beispielsweise das Hinterrad, über keinen eigenen Freilauf verfügt und das Zahnmittelzahnrad beziehungsweise das Kettenrad an der Antriebseinheit immer vom Zugmittel mit der Drehzahl des angetriebenen Rades rotiert wird. Über den Fahrgeschwindigkeitssensor kann die Steuereinheit beispielsweise überprüfen, ob die Fahrgeschwindigkeit über oder unter einer Maximalgeschwindigkeit liegt, über der beispielsweise keine Unterstützung mehr aus den Elektromotoren auf die Ausgangsabtriebswelle übertragen werden darf, wie vorstehend bereits erläutert. Die Steuereinheit übernimmt dann die entsprechende bereits beschriebene Ansteuerung der Elektromotoren. Weiter ist die Steuereinheit bevorzugt mit einem Drehzahl- und/oder Drehwinkelsensor, insbesondere Hallsensor, am Antriebselektromotor und/oder am Variationselektromotor verbunden. Bevorzugt ist die Steuereinheit ebenfalls mit einem Stromstärkesensor für den Antriebselektromotor und/oder für den Variationselektromotor verbunden. Aus der Stromstärke kann die Steuereinheit auf das jeweilige Drehmoment der Elektromotoren schließen. Zusammen mit der Drehzahl kann die Steuereinheit hieraus die Leistung der Elektromotoren berechnen und diese entsprechend regeln.

Eine Hauptfunktion der Steuereinheit liegt bevorzugt darin, dass sie die Drehzahlen und Drehmomente des Antriebselektromotors und das Variationselektromotors derart steuert, dass die summierte Antriebsenergie beziehungsweise Antriebsleistung inklusive der aus menschlicher Muskelkraft stammenden Energie beziehungsweise Leistung an der Ausgangsabtriebswelle der Energieanforderung beziehungsweise Leistungsanforderung der Antriebseinheit entspricht. Die entsprechende Energie- beziehungsweise Leistungsanforderung wird von der Steuereinheit anhand der ihr zur Verfügung stehenden Messsignale bestimmt, beispielsweise unter Berücksichtigung des Tretverhaltens des Fahrers, aus dem beispielsweise ein Beschleunigungswunsch abgeleitet werden kann. Der Grad der elektromotorischen Unterstützung des Fahrers kann beispielsweise an der Steuereinheit eingestellt werden und wird von dieser berücksichtigt. Bevorzugt steuert die Steuereinheit beispielsweise die Drehzahl des Antriebselektromotors proportional zur Fahrgeschwindigkeit. Auf diese Weise übernimmt der Antriebselektromotor bei sämtlichen Fahrgeschwindigkeiten immer den gleichen Anteil der notwendigen Antriebsenergie beziehungsweise Antriebsleistung. Darüber hinaus ist bevorzugt vorgesehen, dass die Steuereinheit je nach Drehrichtung einer durch menschliche Muskelkraft angetriebenen Welle, beispielsweise der Kurbelwelle oder der Eingangsantriebswelle, eine Antriebsunterstützungsfunktion oder eine Bremsfunktion aktiviert. Auf diese Weise realisiert die Antriebseinheit beispielsweise eine Rücktrittbremse, indem aus einem Rückwärtstreten des Fahrers ein Bremskommando abgeleitet wird. In dieser Situation aktiviert die Steuereinheit beispielsweise den zuvor bereits beschriebenen schaltbaren Freilauf und betreibt den Antriebselektromotor als Generator zur Rekuperation von kinetischer Energie in elektrische Energie, wodurch das Fortbewegungsmittel abgebremst wird.

Bei Pedelecs mit Hinterradfederung gibt es einen Effekt, der als Pedalrückschlag oder Pedalkickback bezeichnet wird. Dieser beschreibt, dass es bei jedem Einfedervorgang der Federung automatisch zu einer Drehung des Zugmittelzahnrads, beispielsweise des Kettenblattes, kommt. Hierdurch werden ebenfalls die Kurbelwelle und die Kurbelarme zusammen mit den Pedalen gedreht, was von einem Fahrer als unangenehm wahrgenommen wird. Die Steuereinheit ist nun bevorzugt dazu ausgebildet, den durch die Einfederung des Fortbewegungsmittels verursachten Pedalrückschlag durch eine Ansteuerung des Variationselektromotors teilweise und insbesondere vollständig auszugleichen. Hierfür ist sie mit einem Federwegsensor des Fortbewegungsmittels verbunden, der insbesondere die Einfederung an sich und deren Maß bestimmt und an die Steuereinheit weiterleitet. Durch die Ansteuerung des Variationselektromotors kann die Steuereinheit eine Drehung der Kurbelwelle und damit auch der Pedale bewirken. Anhand des bestimmten Federweges ist die Steuereinheit nun dazu ausgebildet, den Variationselektromotor so anzusteuern, dass dieser der Bewegung der Kurbelwelle durch den Pedalrückschlag entgegenwirkt. Eine Drehung der Pedale unterbleibt dadurch trotz der Einfederung des Hinterrades. Dieser Ausgleich des Pedalkickbacks ist grundsätzlich mit jedem Antrieb realisierbar, der die Stellung der Pedale beeinflussen kann. Dieser Aspekt stellt daher neben der Weiterbildung des in dieser Anmeldung konkret beschriebenen Konzepts eine eigenständige, separate Erfindung dar, die unabhängig von den baulichen und funktionalen Merkmalen der hierin beschriebenen Ausführungsbeispiele ist und separat beansprucht werden kann.

Zur Information des Fahrers kann die Steuereinheit ebenfalls mit einer Anzeigeeinheit verbunden sein. Die Anzeigeeinheit wiederum könnte grundsätzlich beispielsweise über Kabel mit der Steuereinheit verbunden und an einer beliebigen Stelle des Fortbewegungsmittels angeordnet sein, beispielsweise an der Lenkerstange. Es ist allerdings bevorzugt, dass die Anzeigeeinheit ebenfalls innerhalb des Gehäuses der Antriebseinheit angeordnet ist, und zwar derart, dass sie durch ein Sichtfenster in der Antriebseinheit von außen sichtbar ist. Sie befindet sich daher zusammen mit dem Sichtfenster bevorzugt auf der einer Straßenoberfläche abgewandten Seite der Antriebseinheit, sprich, auf der Oberseite der Antriebseinheit. Das Sichtfenster ist aus einem transparenten Material, beispielsweise Glas oder einem Kunststoff, hergestellt. Die Anzeigeeinheit umfasst bevorzugt wenigstens eine Anzeige einer Information über den Betriebszustand des Fortbewegungsmittels, beispielsweise die aktuelle Fahrgeschwindigkeit oder einen Batteriefüllstand. Die Anzeige ist bevorzugt leuchtend ausgebildet und umfasst beispielsweise LEDs. Im Betrieb des Fortbewegungsmittels kann der Fahrer beispielsweise einen Blick nach unten auf die Antriebseinheit werfen und die entsprechenden Informationen an der Anzeigeeinheit ablesen. Die Anzeigeeinheit in Verbindung mit einem Sichtfenster ist grundsätzlich bei jeder Antriebseinheit realisierbar, die über eine Elektronik verfügt.

Wie bereits erläutert wurde, kann die Steuereinheit durch eine Ansteuerung des Variationselektromotors die Drehposition der Kurbelwelle und damit der Pedale steuern. Beispielsweise beim Fahrradfahren ist es typisch, dass bei jedem Anhalten zumindest eines der Pedale in eine Position gebracht werden muss, die nach vorne und nach oben ausgerichtet ist. Blickt man seitlich auf die Kurbelwelle, derart, dass eine Vorwärtsfahrrichtung einer Drehung der Kurbelwelle und der Pedale im Uhrzeigersinn entspricht, so sollte eines der Pedale also beispielsweise auf die 14:00 Uhr-Position gebracht werden. In dieser Anfahrstellung des Pedals kann der Fahrer bequem losfahren und schnell beschleunigen. Auch diese Positionierung, die konventionell vom Fahrer durch ein rückwärts Treten der Pedale eingestellt werden muss, kann von der Steuereinheit eingestellt werden. So ist es bevorzugt vorgesehen, dass die Steuereinheit die Eingangsantriebswelle durch eine Ansteuerung des Variationselektromotors in eine Anfahrstellung bringt. Diese Funktion wird beispielsweise immer dann ausgeführt, wenn die Steuereinheit einen Stillstand des Fortbewegungsmittels detektiert. Das Fortbewegungsmittel wird auf diese Weise immer automatisch startklar gemacht, ohne dass der Fahrer sich hierum kümmern muss. Diese Positionierung eines Pedals in eine Anfahrstellung ist grundsätzlich mit jedem Antrieb realisierbar, der die Stellung der Pedale beeinflussen kann.

Die Erfindung wird nachstehend anhand der in den Figuren gezeigten Ausführungsbeispiele näher erläutert. Es zeigen schematisch:
- Figur 1:: eine Seitenansicht eines Fortbewegungsmittels mit Mittelantriebseinheit;
- Figur 2:: eine Seitenansicht eines Fortbewegungsmittels mit Nabenantriebseinheit;
- Figur 3:: eine Außenansicht, insbesondere Draufsicht, auf die Mittelantriebseinheit;
- Figur 4:: eine Außenansicht, insbesondere Draufsicht, auf die Nabenantriebseinheit;
- Figur 5:: einen Querschnitt durch ein Wellgetriebe;
- Figur 6:: eine Schnittansicht entlang der Rotationsachse durch die Mittelantriebseinheit; und
- Figur 7:: eine Schnittansicht entlang der Rotationsachse durch die Nabenantriebseinheit.

Gleiche beziehungsweise gleich wirkende Bauteile sind mit den gleichen Bezugszeichen beziffert. Sich wiederholende Bauteile sind nicht in jeder Figur gesondert bezeichnet.

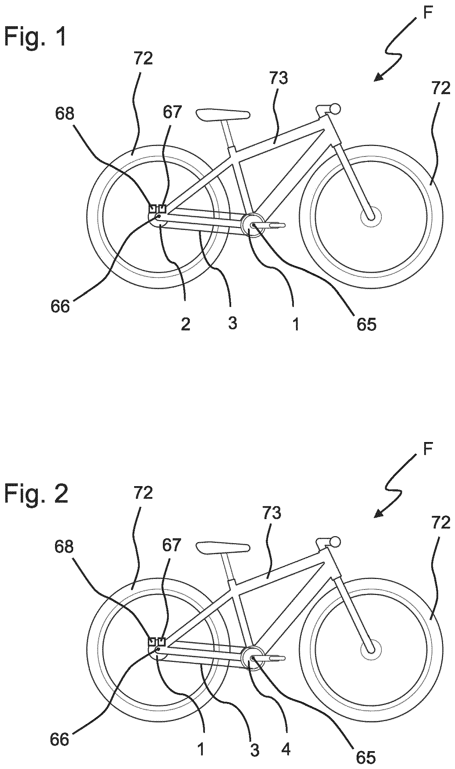

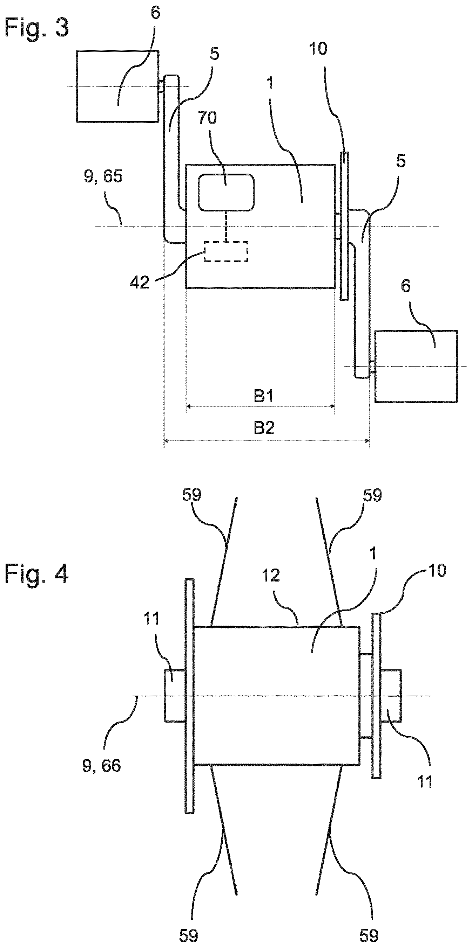

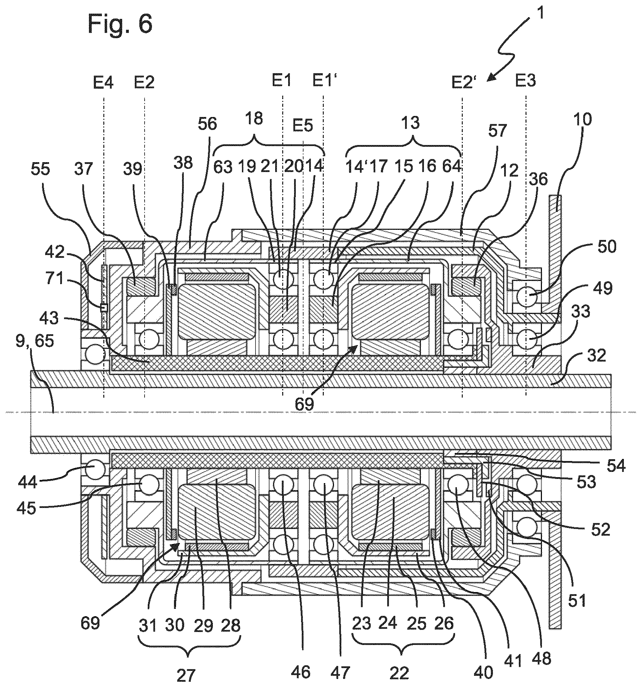

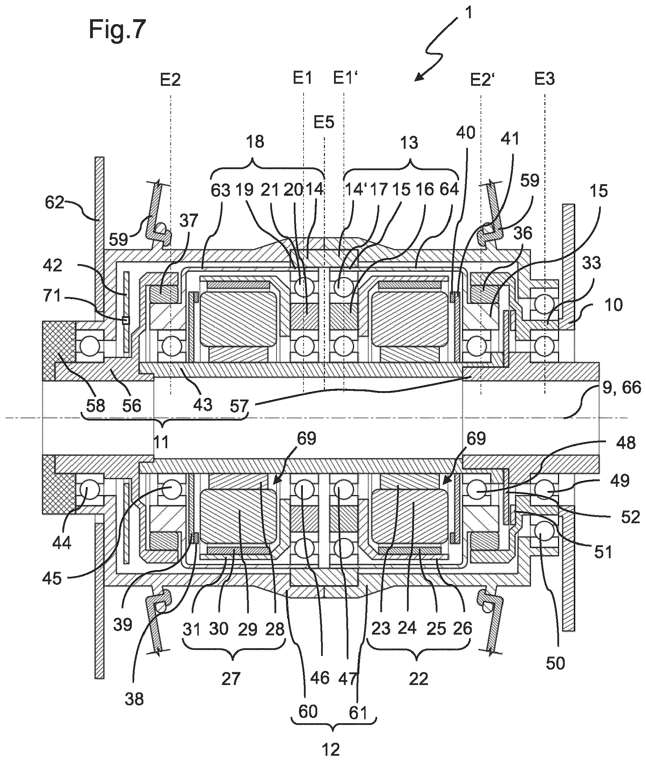

Die Figuren 1 und 2 zeigen jeweils ein Fortbewegungsmittel F, konkret ein Fahrrad, insbesondere Pedelec. Es kann gleichzeitig elektromotorisch und mit menschlicher Muskelkraft angetrieben werden, insbesondere in der Art, dass der Antrieb aus menschlicher Muskelkraft durch Elektromotoren unterstützt wird. Das Fortbewegungsmittel F umfasst in bekannter Weise einen Rahmen 73 und zwei Fahreinrichtungen 72, konkret ein Vorderrad und ein Hinterrad. In der Mitte und am unteren Ende des Rahmens 73 befindet sich die Tretachse 65. An der Verbindungsstelle des Rahmens 73 mit dem Hinterrad liegt die Radachse 66. In Figur 1 ist eine Ausführungsform gezeigt, bei der die Antriebseinheit 1 als Mittelantriebseinheit ausgebildet ist und auf der Tretachse 65 liegt. Menschliche Muskelkraft wird direkt über die Kurbelwelle in die Antriebseinheit 1 eingebracht. Der Getriebeausgang der Antriebseinheit 1 ist als Zugmittelzahnrad 10 (siehe Figuren 3 und 6) ausgebildet und über ein Zugmittel 3, beispielsweise eine Kette, mit der Hinterradnabe 2 verbunden. Bei der Ausführungsform gemäß Figur 2 ist die Antriebseinheit 1 als Nabenantriebseinheit ausgebildet und auf der Radachse 66 angeordnet. Der Getriebeausgang der Antriebseinheit 1 ist in diesem Fall als Nabengehäuse ausgebildet, dessen Rotationsbewegung über die Speichen 59 auf das Hinterrad übertragen werden (siehe Figuren 4 und 7). Die Antriebseinheit 1 ist über das Zugmittel 3 mit dem Tretlager 4 verbunden, über das menschliche Muskelkraft in die Antriebseinheit 1 eingebracht wird.

Die Figuren 3 und 4 zeigen jeweils eine Draufsicht auf die Antriebseinheit 1 von außen. Figur 3 zeigt die Antriebseinheit 1 als Mittelantriebseinheit. Die Rotationsachse 9 der Antriebseinheit 1 liegt auf der Tretachse 65, um die die Kurbelarme 5 und die Pedale 6 des Fortbewegungsmittels F während einer Tretbewegung durch einen Bediener rotieren. Zur Übertragung der Rotationsbewegung auf die Hinterradnabe 2 dient das Zugmittelzahnrad 10. Die Breite der Antriebseinheit 1 ist mit B1 bezeichnet. Der Abstand der Kurbelarme 5 ist mit B2 bezeichnet. Um ein angenehmes und auf die menschliche Anatomie angepasstes Treten der Pedale 6 zu ermöglichen, sollte der Abstand B2 der Kurbelarme 5 zwischen 140 und 180 mm liegen. Die Breite B1 der Antriebseinheit 1 muss deshalb entsprechend geringer sein. Darüber hinaus zeigt Figur 3 die Steuereinheit 42, die in die Antriebseinheit 1 integriert ist. Die Steuereinheit 42 ist mit einer Vielzahl von Sensoren verbunden, um den Betriebszustand der Antriebseinheit 1 und des Fortbewegungsmittels F zu detektieren, wie nachstehend noch näher erläutert wird. Darüber hinaus ist die Steuereinheit 42 mit einer Anzeigeeinheiten 70, beispielsweise einem Leuchtdisplay, verbunden, die von außerhalb der Antriebseinheit 1 einsehbar ist. Beispielsweise ist die Anzeigeeinheit 70 hinter einem Sichtfenster im äußeren Gehäuse der Antriebseinheit 1 angeordnet. Die Anzeigeeinheit 70 kann daher von einem auf dem Fortbewegungsmittel F sitzenden Bediener durch einen Blick nach unten eingesehen werden. In Figur 4 ist eine Ausführungsform der Antriebseinheit 1 als Nabenantriebseinheit gezeigt. Die Rotationsachse 9 der Antriebseinheit 1 liegt daher auf der Radachse 66, um die das Hinterrad während der Fahrt des Fortbewegungsmittels F rotiert. Eine von den Pedalen 6 stammende Rotation wird über das Zugmittelzahnrad 10 auf die Antriebseinheit 1 übertragen. Während die Antriebseinheit 1 als Mittelantriebseinheit von einer rotierenden Kurbelwelle 32 (siehe Figur 6) durchdrungen wird, wird sie als Nabenantriebseinheit von einem stehenden Achskörper 11 durchdrungen, um den das Hinterrad rotiert. Als Getriebeausgang und damit als Ausgangsabtriebswelle 12 dient ein Teil des Nabengehäuses, welches um den Achskörper 11 rotiert und drehfest mit den Speichen 59 verbunden ist. Die Speichen 59 wiederum übertragen die Rotationsbewegung auf den Rest des Hinterrades.

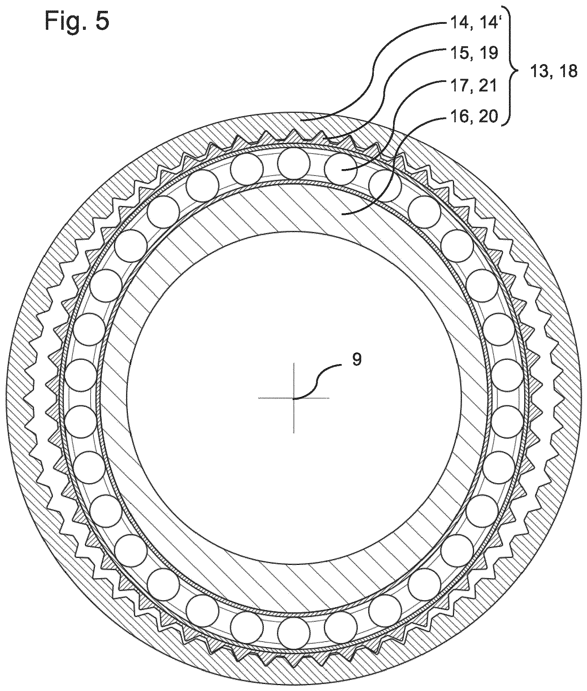

Figur 5 zeigt einen Querschnitt durch ein Wellgetriebe 13, 18, wie es in der Erfindung zur Anwendung kommt. Das Wellgetriebe 13, 18 ist um die Rotationsachse 9 angeordnet und umfasst einen Wellgenerator 16, 20, ein Drehlager 17, 21, insbesondere ein (Rillen-)Kugellager, einen Flexspline 15, 19 und ein Hohlrad 14, 14`. Das Hohlrad 14, 14' und der Wellgenerator 16, 20 sind als starre Bauteile ausgebildet, während der Flexspline 15, 19 biegsam beziehungsweise elastisch ist. Der Wellgenerator 16, 20 ist oval ausgebildet und der Flexspline 15, 19 derart über das Drehlager 17, 21 am Wellgenerator 16, 20 gelagert, dass der Flexspline 15, 19 sich aufgrund seiner Elastizität an die ovale Form des Wellgenerator 16, 20 anpasst. Das Hohlrad 14, 14' weist eine Innenverzahnung und der Flexspline 15, 19 eine komplementäre Außenverzahnung auf, wobei der Flexspline 15, 19 typischerweise weniger Zähne aufweist als das Hohlrad 14, 14`. Durch die ovale Form des Wellgenerators 16, 20 wird die Außenverzahnung des Flexsplines 15, 19 entlang der Hauptachse des Wellgenerators 16, 20 in die Innenverzahnung des Hohlrades 14, 14' gedrückt. Die elastische Verformung des Flexsplines 15, 19 sorgt gleichzeitig dafür, dass dessen Außenverzahnung entlang der Nebenachse des Wellgenerators 16, 20 außer Eingriff mit der Innenverzahnung des Hohlrades 14, 14' gelangt. Rotiert nun der Wellgenerator 16, 20, so dreht sich der Flexspline 15, 19 in entgegengesetzter Drehrichtung mit einem Untersetzungsverhältnis von i = z_{H} / (z_{H} - z_{F}), wobei z_{H} die Zähnezahl des Hohlrades 14, 14` und z_{F} die Zähnezahl des Flexsplines 15, 19 ist. Wird der Flexspline 15, 19 festgehalten, so rotiert das Hohlrad 14, 14' mit der entsprechenden untersetzten Geschwindigkeit gleichsinnig wie der Wellgenerator 16, 20. Derartige Wellgetriebe 13, 18 sind Summiergetriebe und im Stand der Technik bekannt, weshalb sie hier nicht näher erläutert werden müssen.

Figur 6 zeigt einen Schnitt durch die Antriebseinheit 1 ausgebildet als Mittelantriebseinheit entlang der Rotationsachse 9 beziehungsweise der Tretachse 65. Die Tretachse 65 wird von der Kurbelwelle 32 definiert, die von einem Bediener über die Pedale 6 antreibbar ist und die die Antriebseinheit 1 entlang der Rotationsachse 9 durchdringt. Die Kurbelwelle 32 ist drehfest mit der Eingangsantriebswelle 33 verbunden, über die die vom Bediener aufgebrachte Antriebsenergie in das Getriebe der Antriebseinheit 1 eingebracht wird. Der Getriebeausgang wird durch die Ausgangsabtriebswelle 12 gebildet, die drehfest mit dem Zugmittelzahnrad 10, hier dem Kettenblatt, verbunden ist. Die Antriebseinheit 1 weist drei Quellen für Antriebsenergie beziehungsweise Antriebsleistung auf: Zum einen menschliche Muskelkraft über die Eingangsantriebswelle 33 und zum anderen zwei Elektromotoren 22, 27, konkret den Variationselektromotor 22 und den Antriebselektromotor 27. Beide Elektromotoren 22, 27 sind über jeweils ein Wellgetriebe 13, 18 in den Antriebsstrang der Antriebseinheit 1 eingebunden. Konkret ist der Variationselektromotor 22 über das Variationswellgetriebe 13 und der Antriebselektromotor 27 über das Antriebswellgetriebe 18 in den Antriebsstrang eingebunden.

Dreht ein Bediener die Kurbelwelle 32 durch Treten in die Pedale 6, so dreht er dabei die Eingangsantriebswelle 33. Die Eingangsantriebswelle 33 ist über einen Freilauf 36 mit dem Flexspline 15 des Variationswellgetriebes 13 verbunden. Der Freilauf 36 ist dabei derart ausgebildet, dass er bei einer Rotation der Eingangsantriebswelle 33 in Vorwärtsfahrtrichtung greift und eine drehfeste Verbindung zwischen der Eingangsantriebswelle 33 und dem Flexspline 15 herstellt. Bei einer Rotation in Rückwärtsrichtung dagegen dreht der Freilauf 36 frei. Durch die Verzahnung des Flexsplines 15 mit dem Hohlrad 14' des Variationswellgetriebes 13, wird das Hohlrad 14' mit dem Flexspline 15 mit rotiert, und zwar mit einer Übersetzung von eins zu eins. Das Hohlrad 14' wiederum ist drehfest mit der Ausgangsabtriebswelle 12 verbunden, sodass insgesamt die vom Bediener durch Treten der Pedale 6 eingebrachte Antriebsenergie auf die Ausgangsabtriebswelle 12 und damit das Zugmittelzahnrad 10 übertragen wird.

Der Variationselektromotor 22 umfasst einen Stator 23 mit einer Statorwicklung 24. Der Stator 23 ist auf einem stationären Gegenlager 43 angeordnet, dass beispielsweise rohrförmig um die Kurbelwelle 32 herum angeordnet ist. Darüber hinaus umfasst der Variationselektromotor 22 einen Rotor 26 mit Permanentmagneten 25. Der Rotor 26 des Variationselektromotors 22 ist drehfest, insbesondere einstückig, mit dem Wellgenerator 16 des Variationswellgetriebes 13 verbunden. Der Variationselektromotor 22 treibt daher den Wellgenerator 16 des Variationswellgetriebes 13 an. Je nach Rotationsrichtung des Variationselektromotors 22 wird die Drehzahl des Hohlrades 14' in Relation zur Drehzahl der Eingangsantriebswelle 33 unterschiedlich übersetzt. Auf diese Weise kann das Übersetzungsverhältnis zwischen der Eingangsantriebswelle 33 und der Ausgangsabtriebswelle 12 stufenlos eingestellt werden. Dreht der Variationselektromotor 22 gleichsinnig mit der Eingangsantriebswelle 33, so ergibt sich eine Übersetzung zwischen Eingangsantriebswelle 33 und Ausgangsabtriebswelle 12 ins Schnelle, was bedeutet, dass sich die Ausgangsabtriebswelle 12 schneller dreht als die Eingangsantriebswelle 33. Entsprechend ergibt sich eine Übersetzung zwischen Eingangsantriebswelle 33 und Ausgangsabtriebswelle 12 ins Langsame, wenn der Variationselektromotor 22 gegensinnig mit der Eingangsantriebswelle 33 dreht. In diesem Fall dreht sich die Ausgangsabtriebswelle 12 langsamer als die Eingangsantriebswelle 33. Insgesamt bilden daher der Variationselektromotor 22 am Wellgenerator 16 und die Eingangsantriebswelle 33 am Flexspline 15 jeweils einen Getriebeeingang am Variationswellgetriebe 13. Das Hohlrad 14' und die Ausgangsabtriebswelle 12 bilden den Getriebeausgang. Der Variationselektromotor 22 und das Variationswellgetriebe 13 bilden ein stufenloses Getriebe zwischen der Eingangsantriebswelle 33 und der Ausgangsabtriebswelle 12. Das Hohlrad 14' bildet dabei den Summierungspunkt zwischen den beiden Getriebeeingängen.

Der Antriebselektromotor 27 umfasst ebenfalls einen Stator 28 mit Statorwicklungen 29 sowie einen Rotor 31 mit Permanentmagneten 30. Der Stator 28 ist analog zum Variationselektromotor 22 auf einem stationären Gegenlager 43 angeordnet. Der Rotor 31 des Antriebselektromotors 27 ist drehfest, insbesondere einstückig, mit dem Wellgenerator 20 des Antriebswellgetriebes 18 verbunden. Der Antriebselektromotor 27 treibt daher den Wellgenerator 20 des Antriebswellgetriebes 18 an. Durch die Rotation des Wellgenerators 20 wird die Antriebsenergie des Antriebselektromotors 27 auf den Flexspline 19 übertragen. Der Flexspline 19 ist über einen Freilauf 37 an einem stationären Gehäuseteil 56 gelagert. Über den Flexspline 19 wird die Antriebsenergie auf das Hohlrad 14 des Antriebswellgetriebes 18 übertragen. Das Hohlrad 14 des Antriebswellgetriebes 18 ist drehfest mit dem Hohlrad 14` des Variationswellgetriebes 13 verbunden und insbesondere einstückig mit diesem als gemeinsames Hohlrad 14, 14' beider Wellgetriebe 13, 18 ausgebildet. In diesem drehfest verbundenen oder einstückig ausgebildeten gemeinsamen Hohlrad 14, 14' wird die Antriebsenergie beziehungsweise Antriebsleistung der beiden Elektromotoren 22, 27 sowie der über die Kurbelwelle 32 eingebrachten menschlichen Muskelkraft summiert und auf die Ausgangsabtriebswelle 12 übertragen. Der Antriebselektromotor 27 ist dazu ausgebildet, den Hauptteil der elektrischen Antriebsenergie beziehungsweise Antriebsleistung für den Fahrbetrieb des Fortbewegungsmittels F zu liefern. Um das Hohlrad 14 in Vorwärtsfahrrichtung anzutreiben, muss ebenfalls der Wellgenerator 20 in Vorwärtsfahrrichtung rotiert werden. Hieraus ergibt sich eine entgegengesetzte Drehrichtung des Flexsplines 19, also in Rückwärtsrichtung. Damit die Antriebsenergie vom Wellgenerator 20 auf das Hohlrad 14 übertragen wird, muss der Flexspline 19 daher in Rückwärtsrichtung an einem stationären Gehäuseteil abgestützt werden. Der Freilauf 37 ist daher derart ausgebildet, dass er bei einer rückwärts-Drehrichtung des Flexsplines 19 eine drehfeste Verbindung zwischen dem Flexspline 19 und dem stationären Gehäuseteil 56 herstellt. Eine Rückwärtsdrehung des Flexsplines 19 wird dadurch verhindert, wodurch die gesamte Antriebsenergie, die vom Antriebselektromotor 27 auf den Wellgenerator 20 aufgebracht wird, auf das Hohlrad 14 übergeht und zum Antrieb des Fortbewegungsmittels F zur Verfügung steht.

Wird dagegen der Antriebselektromotor 27 nicht betrieben oder nur langsamer betrieben, als das Hohlrad 14 beispielsweise vom Bediener durch menschliche Muskelkraft rotiert wird, so dreht die Ausgangsabtriebswelle 12 das Hohlrad 14 und durch dessen Verzahnung mit dem Flexspline 19 auch den Flexspline 19 in Vorwärtsfahrtrichtung mit. In der der Vorwärtsfahrtrichtung entsprechenden Drehrichtung des Flexsplines 19 ermöglicht der Freilauf 37 allerdings eine freie Rotation, wodurch im Zusammenspiel mit dem Drehlager 21 zwischen dem Flexspline 19 und dem Wellgenerator 20 keine Antriebsenergie auf den Wellgenerator 20 und damit den Rotor 31 des Antriebselektromotors 27 übertragen wird. Der Antriebselektromotor 27 muss daher vom Fahrer beim Pedalieren durch reine Muskelkraft nicht mitgeschleppt werden, wodurch ein leichtes, angenehmes Treten der Pedale 6 ermöglicht wird.

Gemäß einer bevorzugten Ausführungsform der Erfindung ist der Freilauf 37 als schaltbarer Freilauf 37 ausgebildet. Dies bedeutet, dass er von der Steuereinheit 42 angesteuert werden kann, und zwar derart, dass er in beiden Drehrichtungen eine drehfeste Verbindung zwischen dem Flexspline 19 und dem stationären Gehäuseteil 56 herstellt. Wird der Flexspline 19 hierdurch auch in einer vorwärts-Drehrichtung blockiert, so wird Antriebsenergie vom Hohlrad 14 auf den Wellgenerator 20 und damit den Rotor 31 des Antriebselektromotors 27 übertragen. Es ist daher dann möglich, den Antriebselektromotor 27 als Generator zu betreiben und Rotationsenergie aus dem Hohlrad 14 in elektrische Energie umzuwandeln, die beispielsweise in eine Batterie eingespeist werden kann. Durch den Betrieb des Antriebselektromotors 27 als Generator, wird das Fortbewegungsmittel F abgebremst, sodass dieser Betrieb auch als Bremse benutzt werden kann. Darüber hinaus kann der Antriebselektromotor 27, wie vorstehend bereits beschrieben, zum negativen Ausgleich einer vom Variationselektromotor 22 in den Antriebsstrang eingebrachten Antriebsenergie beziehungsweise Antriebsleistung betrieben werden, entweder als Generator oder auch im Motorbetrieb. Dies ist beispielsweise zum Einhalten von gesetzlichen Vorschriften nützlich, nach denen ab einer gewissen Maximalgeschwindigkeit keine Antriebsleistung von den Elektromotoren 20, 27 mehr auf die Ausgangsabtriebswelle 12 übertragen werden darf. Durch den schaltbaren Freilauf 37 und die Nutzung des Antriebselektromotors 27 zum negativen Ausgleich einer vom Variationselektromotor 27 eingebrachten Leistung, kann der Variationselektromotor 22 auch bei einer Fahrtgeschwindigkeit schneller als der gesetzlichen Maximalgeschwindigkeit noch zur Bereitstellung des stufenlosen Getriebes angetrieben werden. Die hierbei notwendige Abgabe von Antriebsenergie in den Antriebsstrang wird durch den Antriebselektromotor 27 negativ ausgeglichen.

Die vorliegende Erfindung zeichnet sich durch eine besonders schmale Bauweise entlang der Rotationsachse 9 aus. Hierfür umfasst die Antriebseinheit 1 eine Reihe von baulichen Besonderheiten, auf die nachstehend eingegangen wird. Zum einen nutzt die Erfindung zwei Wellgetriebe 13, 18, die sowohl die Antriebsenergie beziehungsweise Antriebsleistung zweier Elektromotoren 22, 27 als auch diejenige aus menschlicher Muskelkraft in zwei drehfest miteinander verbundenen oder sogar einstückig ausgebildeten Hohlrädern 14, 14' summieren. Durch die Ausbildung mit einem gemeinsamen Hohlrad 14, 14` können die beiden Wellgetriebe 13, 18 nah aneinander angeordnet werden, wodurch nur ein geringer Bauraumbedarf in Axialrichtung der Rotationsachse 9 besteht.

Zusätzlich sind die Flexsplines 15, 19 der beiden Wellgetriebe 13, 18 mit einer Hülse 63, 64 ausgebildet. Die Hülse 63, 64 ist eine zylindrische Verlängerung der Flexsplines 15, 19 von deren Eingriffsbereich mit dem Hohlrad 14, 14' in Axialrichtung der Rotationsachse 9. Die beiden Wellgetriebe 13, 18 liegen dabei axial entlang der Rotationsachse 9 gesehen in der Mitte der Antriebseinheit 1, während sich die Hülsen 63, 64 von den Wellgetrieben 13, 18 und der Mitte der Antriebseinheit weg erstrecken. An ihrem dem Eingriffsbereich mit dem Hohlrad 14, 14' gegenüberliegenden axialen Ende sind die Hülsen 63, 64 über jeweils ein Drehlager 45, 48 an einem stationären Gehäuseteil, beispielsweise dem Gegenlager 43, gelagert. Die Flexsplines 15, 19 erstrecken sich mit anderen Worten in Axialrichtung der Rotationsachse 9 gesehen von einer senkrecht zur Rotationsachse 9 angeordneten Getriebeebene E1, E1', in der sich die Komponenten der Wellgetriebe 13, 18, Wellgenerator 16, 20, Drehlager 17, 21, Flexsplines 15, 19 und Hohlrad 14, 14' in Radialrichtung der Rotationsachse 9 überlappen, bis zu einer Lagerebene E2, E2`, in der die Flexsplines 15, 19 mit den Drehlagern 45, 48 in Radialrichtung der Rotationsachse 9 überlappen. Die Flexsplines 15, 19 weisen im Inneren ihrer hohlzylindrischen Körper jeweils einen Hülseninnenraum 69 auf. Um hier keinen Bauraum ungenutzt zu lassen, sind in den gezeigten Ausführungsbeispielen der Erfindung die Elektromotoren 22, 27 innerhalb der jeweiligen Hülseninnenräume 69 angeordnet, und zwar der Variationselektromotor 22 im Hülseninnenraum 69 des Flexsplines 15 des Variationswellgetriebes 13 und der Antriebselektromotor 27 im Hülseninnenraum 69 des Flexsplines 19 des Antriebswellgetriebes 18. Insbesondere sind die beiden Elektromotoren 22, 27 über die gesamte axiale Ausdehnung ihres Stators 23, 28 mit den Statorwicklungen 24, 29 sowie dem Rotor 26, 31 mit den Permanentmagneten 25, 30 im Inneren der Flexsplines 15, 19, insbesondere in den entsprechenden Hülseninnenräumen 69, angeordnet. Darüber hinaus sind die Elektromotoren 22, 27 zwischen der Getriebeebene E1, E1' und der Lagerebene E2, E2' angeordnet. Konkret ist der Variationselektromotor 22 zwischen der Getriebeebene E1' und der Lagerebene E2' angeordnet, während der Antriebselektromotor 27 zwischen der Getriebeebene E1 und der Lagerebene E2 angeordnet ist.

Ein weiterer Kerngedanke der vorliegenden Erfindung liegt darin, die Antriebseinheit 1 dadurch in Axialrichtung der Rotationsachse 9 besonders schmal auszubilden, indem verschiedene Drehlager in Axialrichtung der Rotationsachse 9 auf selber Höhe mit anderen Komponenten angeordnet sind. Die einzelnen Komponenten der Antriebseinheit 1 sind daher in Axialrichtung der Rotationsachse 9 gesehen ineinander verschachtelt, wie schon die Elektromotoren 22, 27 mit den Wellgetrieben 13, 18 durch die Anordnung im Hülseninnenraum 69. Beispielsweise ist es vorgesehen, dass das Drehlager 46, beispielsweise ein Kugellager, für den Rotor 31 des Antriebselektromotors 27 gegenüber einem stationären Gegenlager 43 zusammen mit dem Antriebswellgetriebe 18 in der Getriebeebene E1 angeordnet ist. Das Drehlager 46 überlappt beispielsweise über seine gesamte axiale Ausdehnung in Richtung der Rotationsachse 9 mit den weiteren Komponenten des Antriebswellgetriebes 18, beispielsweise dem Wellgenerator 20, dem Drehlager 21, dem Flexspline 19 und dem Hohlrad 14. Auf diese Weise muss das Drehlager 46 nicht axial in Reihe mit diesen Komponenten des Antriebswellgetriebes 18 ausgebildet sein, wodurch insgesamt die Ausdehnung der Antriebseinheit 1 verkleinert wird. Dasselbe gilt für das Drehlager 47 für den Rotor 26 des Variationselektromotors 22. Dieses Drehlager 47 ist genauso ausgebildet wie das Drehlager 46 und in analoger Weise in der Getriebeebene E1' des Variationswellgetriebes 13 angeordnet.

Eine weitere Umsetzung dieses Grundgedankens findet sich in den Lagerebenen E2, E2`. In der Lagerebene E2 des Flexsplines 19 überlappen sich in Radialrichtung der Rotationsachse 9 gesehen das Drehlager 45, über das der Flexspline 19 am stationären Gegenlager 43 gelagert ist, und der Freilauf 37 zwischen dem Flexspline 19 und dem stationären Gehäuseteil 56. Genauso überlappen sich in Radialrichtung der Rotationsachse 9 gesehen in der Lagerebene E2' des Flexsplines 15 das Drehlager 48, über das der Flexspline 15 am stationären Gegenlager 43 gelagert ist, und der Freilauf 36 zwischen dem Flexspline 15 und der Eingangsantriebswelle 33. Auch hierdurch wird die gesamte axiale Ausdehnung der Antriebseinheit 1 verringert.

Auch die Drehlager 49 und 50, beide ebenfalls bevorzugt Kugellager, sind in einer gemeinsamen, senkrecht zur Rotationsachse 9 angeordneten Wellenlagerebene E3 angeordnet. Das Drehlager 49 ist zwischen der Eingangsantriebswelle 33 und der Ausgangsabtriebswelle 12 angeordnet und lagert diese beiden rotierbar zueinander. Das Drehlager 50 ist zwischen der Ausgangsabtriebswelle 12 und einem stationären Gehäuseteil 57 angeordnet. Die Drehlager 49, 50 sind (bis auf den notwendigen Durchmesserunterschied) baugleich ausgeführt, liegen konzentrisch um die Rotationsachse 9 und überlappen sich in Radialrichtung der Rotationsachse 9 gesehen insbesondere vollständig.

Ein weiteres Drehlager 44 zwischen der Kurbelwelle 32 und einem stationären Gehäuseteil 56 liegt in einer weiteren senkrecht zur Rotationsachse 9 angeordneten Elektroniklagerebene E4, in der sich das Drehlager 44 zumindest teilweise mit der Steuereinheit 42 in Radialrichtung der Rotationsachse 9 überlappt. Damit ist die Steuereinheit 42 nicht lediglich außen an die Antriebseinheit 1 angesetzt, sondern mit Getriebeelementen der Antriebseinheit 1 verschachtelt ausgebildet, wodurch wieder axiale Ausdehnung eingespart wird. Nach außen ist die Steuereinheit 42 durch einen Gehäusedeckel 55 abgedeckt.

Eine besonders kompakte Ausbildung gelingt dadurch, dass die Wellgetriebe 13, 18, und insbesondere die Flexsplines 15, 19, sowie die Elektromotoren 22, 27, die Drehlager 46, 47 für die Rotoren 26, 31 und die Wellengeneratoren 16, 20 gegenüber dem Gegenlager 43 und die Freiläufe 36, 37 symmetrisch um eine Symmetrieebene E5 ausgebildet und angeordnet sind. Die Symmetrieebene E5 ist dabei senkrecht zur Rotationsachse 9 und zwischen den Wellgetrieben 13, 18 angeordnet.

Die Steuereinheit 42 ist zur Steuerung der Elektromotoren 22, 27 ausgebildet. Um die jeweiligen Steuerfunktionen erfüllen zu können, benötigt die Steuereinheit 42 verschiedene Messwerte zum aktuellen Betriebszustand der Antriebseinheit 1 und des Fortbewegungsmittels F. Beispielsweise ist die Steuereinheit 42 mit dem in den Figuren 1 und 2 gezeigten Federwegsensor 67 und dem Fahrgeschwindigkeitssensor 68 verbunden, die beide am Hinterrad angeordnet sind. Darüber hinaus ist die Steuereinheit 42 mit einem Stromstärkesensor 71 verbunden, über den die Steuereinheit 42 die jeweils in den Elektromotoren 22, 27 fließende Stromstärke misst. Zusätzlich ist die Steuereinheit 42 über eine Leiterplatte 39 mit einem Hallsensor 38 am Antriebselektromotor 27 und über eine Leiterplatte 41 mit einem Hallsensor 40 am Variationselektromotor 22 verbunden. Sowohl die Leiterplatten 39, 41 als auch die Hallsensoren 38, 40 sind ebenfalls mit dem jeweiligen Elektromotor 22, 27 im jeweiligen Hülseninnenraum 69 angeordnet. Über diese Sensoren 38, 40 sind die Drehzahlen und die Drehwinkelstellungen der Elektromotoren 22, 27 bestimmbar. Eine weitere mit der Steuereinheit 42 verbundene Sensoreinheit 51, 52 weist ein ruhendes Teil 52 am stationären Gehäuse, beispielsweise dem Gegenlager 43, und ein mit der Eingangsantriebswelle 33 mitrotierendes Teil 51 auf. Die Sensoreinheit 51, 52 bestimmt beispielsweise das durch menschliche Muskelkraft auf die Kurbelwelle 32 und damit die Eingangsantriebswelle 33 aufgebrachte Drehmoment sowie die Drehwinkelstellung. Aus der zeitlichen Ableitung der Drehwinkelstellung kann ebenfalls die Drehzahl der Kurbelwelle 32 und damit der Eingangsantriebswelle 33 bestimmt werden. Der stationäre Teil 52 der Sensoreinheit 51, 52 ist insbesondere mit einer Befestigungsmutter 53 am Gegenlager 43 befestigt, insbesondere in einem Bereich, in dem das Gegenlager 43 über ein Drehlager 54, insbesondere ein Nadellager, gegenüber der Kurbelwelle 32 gelagert ist.

Figur 7 zeigt einen Schnitt durch die Antriebseinheit 1 ausgebildet als Nabenantriebseinheit entlang der Rotationsachse 9 beziehungsweise der Radachse 66. Die Ausbildung der Antriebseinheit 1 ist zu größten Teilen analog zur Antriebseinheit 1 ausgebildet als Mittelantriebseinheit. Es wird daher lediglich auf die Unterschiede zur vorstehenden Ausführungsform eingegangen. Insbesondere ist bei der Ausbildung der Antriebseinheit 1 als Nabenantriebseinheit keine Kurbelwelle 32 vorhanden, die die Antriebseinheit 1 durchdringt. Die Antriebseinheit 1 wird dagegen von einem ortsfesten, stehenden Achskörper 11 durchdrungen, der beispielsweise das Gegenlager 43 sowie verschiedene stationäre Gehäuseteile 56, 57 und ein Steckergehäuse 58 für die elektronische Steuereinheit 42 umfasst. Die Eingangsantriebswelle 33 wird nicht direkt von den Pedalen 6 beziehungsweise der Kurbelwelle 32 bewegt, sondern die Pedalbewegung wird über das Zugmittel 3 und das Zugmittelzahnrad 10 auf die Eingangsantriebswelle 33 übertragen. Gleichzeitig ist die Ausgangsabtriebswelle 12 nicht mit dem Zugmittelzahnrad 10 verbunden, sondern wird durch ein rotierendes Nabengehäuse mit Nabengehäuseteilen 60, 61, gebildet, die drehfest mit dem Hohlrad 14, 14' verbunden sind. An den Nabengehäuseteilen 60, 61 sind die Speichen 59 des Hinterrades angeordnet. Darüber hinaus ist an dem Nabengehäuse ebenfalls eine Bremsscheibe 62 angeordnet. Ansonsten entspricht die Ausführungsform der Antriebseinheit 1 als Nabenantriebseinheit derjenigen als Mittelantriebseinheit, weshalb zur Vermeidung von Wiederholungen auf die vorstehenden Ausführungen Bezug genommen wird.

Alles in allem ermöglicht es die Erfindung, eine besonders kompakte Antriebseinheit 1 im Sinne ihrer axialen Erstreckung entlang der Rotationsachse 9 bereitzustellen. Darüber hinaus lassen sich mit der erfindungsgemäßen Antriebseinheit 1 eine Vielzahl von bei modernen Fortbewegungsmitteln F, beispielsweise Pedelecs, gewünschten Steuerfunktionen darstellen.

## Patentansprüche

1. Antriebseinheit (1) für ein gleichzeitig durch aus menschlicher Muskelkraft und elektromotorisch bereitgestellte Antriebsenergie antreibbares Fortbewegungsmittel (F), umfassend
- eine Eingangsantriebswelle (33) zur Weiterleitung aus menschlicher Muskelkraft erzeugter Antriebsenergie,
- eine Ausgangsabtriebswelle (12) zur Abgabe von Antriebsenergie an eine Fahreinrichtung (72),
- ein um eine Rotationsachse (9) angeordnetes Antriebswellgetriebe (18) mit einem ersten Wellgenerator (20), einem ersten Flexspline (19) und einem Hohlrad (14),
- einen um die Rotationsachse (9) angeordneten Antriebselektromotor (27) mit einem Stator (28) und einem Rotor (31), wobei Antriebsenergie des Antriebselektromotors (27) über das Antriebswellgetriebe (18) auf die Ausgangsabtriebswelle (12) übertragbar ist, die Antriebseinheit ist **gekennzeichnet durch**:
- ein im Antriebsstrang zwischen der Eingangsantriebswelle (33) und der Ausgangsabtriebswelle (12) angeordnetes Variationswellgetriebe (13) mit einem zweiten Wellgenerator (16), einem zweiten Flexspline (15) und einem Hohlrad (14`), wobei das Variationswellgetriebe (13) derart angeordnet ist, dass es die aus menschlicher Muskelkraft stammende Antriebsenergie der Eingangsantriebswelle (33) aufnimmt und zur Ausgangsabtriebswelle (12) der Antriebseinheit (1) weiterleitet,
- einen Variationselektromotor (22) mit einem Stator (23) und einem Rotor (26), dessen Antriebsenergie ebenfalls in das Variationswellgetriebe (13) eingebracht wird, wobei **durch** das Variationswellgetriebe (13) die summierte Energie aus menschlicher Muskelkraft und dem Variationselektromotor (22) auf die Ausgangsabtriebswelle (12) übertragbar ist,
wobei das Hohlrad (14) des Antriebswellgetriebes (18) und das Hohlrad (14`) des Variationswellgetriebes (13) drehfest zueinander ausgebildet sind und die summierte Antriebsenergie aus menschlicher Muskelkraft, dem Antriebselektromotor (27) und dem Variationselektromotor (22) auf die Ausgangsabtriebswelle (12) übertragen.

2. Antriebseinheit (1) nach Anspruch 1,
**dadurch gekennzeichnet,**
**dass** das Variationswellgetriebe (13) und/oder der Variationselektromotor (22) um die Rotationsachse (9) angeordnet sind.

3. Antriebseinheit (1) nach einem der vorhergehenden Ansprüche,
**dadurch gekennzeichnet,**
**dass** das Variationswellgetriebe (13) ein stufenloses Getriebe zwischen der Eingangsantriebswelle (33) und der Ausgangsabtriebswelle (12) ausbildet.

4. Antriebseinheit (1) nach einem der vorhergehenden Ansprüche,
**dadurch gekennzeichnet,**
**dass** wenigstens einer, bevorzugt beide, der Flexsplines (15, 19) als eine sich in Richtung der Rotationsachse (9) erstreckende Hülse (63, 64) ausgebildet ist, die auf einer axialen Seite mit einem Drehlager (45, 48) verbunden ist und zur anderen axialen Seite einen Eingriffsbereich für den Wellgenerator (16, 20) aufweist, wobei zwischen dem Drehlager (45, 48) und dem Wellgenerator (16, 20) in Richtung der Rotationsachse (9) gesehen ein Hülseninnenraum (69) vorhanden ist, und
**dass** wenigstens einer der, bevorzugt beide, Elektromotoren (22, 27) in Axialrichtung der Rotationsachse (9) zumindest teilweise, bevorzugt vollständig, im Hülseninnenraum (69) des dem jeweiligen Elektromotor (22, 27) zugeordneten Wellgetriebes (13, 18) angeordnet ist, insbesondere bezüglich der axialen Erstreckung seines Rotors (26, 31) und/oder Stators (23, 28) entlang der Rotationsachse (9).

5. Antriebseinheit (1) nach einem der vorhergehenden Ansprüche,
**dadurch gekennzeichnet,**
**dass** der Wellgenerator (16, 20), der Flexspline (15, 19) und das Hohlrad (14, 14') des Antriebswellgetriebes (18) und/oder des Variationswellgetriebes (13) in einer senkrecht zur Rotationsachse (9) liegenden Getriebeebene (E1, E1') einander überlappend angeordnet sind und der Flexspline (15, 19), insbesondere die Hülse (63) des Flexsplines (15, 19), in einer senkrecht zur Rotationsachse (9) liegenden Lagerebene (E2, E2`) gegenüber einem Gegenlager (43) rotierbar gelagert ist, wobei der Antriebselektromotor (27) und/oder der Variationselektromotor (22) zwischen der Getriebeebene (E1, E1') und der Lagerebene (E2, E2`) angeordnet ist.

6. Antriebseinheit (1) nach einem der vorhergehenden Ansprüche,
**dadurch gekennzeichnet,**
**dass** ein Drehzahl- und/oder Drehwinkelsensor (38, 40), insbesondere Hallsensor, am Antriebselektromotor (27) und/oder am Variationselektromotor (22) vorgesehen ist, wobei der Drehzahl- und/oder Drehwinkelsensor (38, 40) insbesondere im Hülseninnenraum (69) des Flexsplines (15, 19) angeordnet ist.

7. Antriebseinheit (1) nach einem der vorhergehenden Ansprüche,
**dadurch gekennzeichnet,**
**dass** ein Drehlager (50) für die Ausgangsabtriebswelle (12) und ein Drehlager (49) für die Eingangsantriebswelle (33) in einer gemeinsamen senkrecht zur Rotationsachse (9) liegenden Wellenlagerebene (E3) angeordnet sind.

8. Antriebseinheit (1) nach einem der vorhergehenden Ansprüche,
**dadurch gekennzeichnet,**
**dass** die beiden Elektromotoren (22, 27) und/oder die beiden Wellgetriebe (13, 18) koaxial zueinander um die Rotationsachse (9) angeordnet sind.

9. Antriebseinheit (1) nach einem der vorhergehenden Ansprüche,
**dadurch gekennzeichnet,**
**dass** die Wellgetriebe (13, 18) und die Elektromotoren (22, 27) zueinander symmetrisch bezüglich einer senkrecht zur Rotationsachse (9) verlaufenden Symmetrieebene (E5) ausgebildet und angeordnet sind.

10. Antriebseinheit (1) nach einem der vorhergehenden Ansprüche,
**dadurch gekennzeichnet,**
**dass** die Eingangsantriebswelle (33) zumindest in einer Drehrichtung drehfest mit dem Flexspline (15) des Variationswellgetriebes (13) verbunden ist und die aus menschlicher Muskelkraft stammende Energie über den Flexspline (15) in das Variationswellgetriebe (13) eingebracht wird.

11. Antriebseinheit (1) nach einem der vorhergehenden Ansprüche,
**dadurch gekennzeichnet,**
**dass** der Flexspline (19) des Antriebswellgetriebes (18) über einen Freilauf (37) an einem stationären Gehäuseteil (56) gelagert ist.

12. Antriebseinheit (1) nach dem vorhergehenden Anspruch,
**dadurch gekennzeichnet,**
**dass** der Freilauf (37) schaltbar ausgebildet ist oder der Flexspline (19) und das stationäre Gehäuseteil (56) durch eine separate Kupplungseinheit drehfest verbindbar sind, so dass der Antriebselektromotor (27) als Generator betreibbar ist, der Antriebsenergie vom Hohlrad (14) aufnimmt und in elektrische Energie umwandelt.

13. Antriebseinheit (1) nach dem vorhergehenden Anspruch,
**dadurch gekennzeichnet,**
**dass** der Antriebselektromotor (27) ab einer maximalen Fahrgeschwindigkeit des Fortbewegungsmittels (F) mit gegenüber dem Variationselektromotor (22) entgegengesetzter und betragsmäßig übereinstimmender Antriebsleistung betrieben wird, so dass die gesamte von den Elektromotoren (22, 27) auf die Ausgangsabtriebswelle (12) aufgebrachte Antriebsleistung gleich null ist.

14. Antriebseinheit (1) nach einem der vorhergehenden Ansprüche,
**dadurch gekennzeichnet,**
**dass** ein Drehlager (45) zwischen einem Gegenlager (43) und dem Flexspline (19) des Antriebswellgetriebes (18) in einer senkrecht zur Rotationsachse (9) liegenden Lagerebene (E2) mit einem Freilauf (37) überlappend angeordnet ist und/oder dass ein Drehlager (48) zwischen einem Gegenlager (43) und dem Flexspline (15) des Variationswellgetriebes (13) in einer senkrecht zur Rotationsachse (9) liegenden Lagerebene (E2`) mit einem Freilauf (36) überlappend angeordnet ist.

15. Antriebseinheit (1) nach einem der vorhergehenden Ansprüche,
**dadurch gekennzeichnet,**
**dass** der Wellgenerator (16, 20), der Flexspline (15, 19) und das Hohlrad (14, 14') des Antriebswellgetriebes (18) und/oder des Variationswellgetriebes (13) in einer senkrecht zur Rotationsachse (9) liegenden Getriebeebene (E1, E1') zusammen mit einem Drehlager (46, 47) für den Rotor (26, 31) des Antriebselektromotors (27) und/oder des Variationselektromotors (22), insbesondere bezüglich eines Gegenlagers (43), angeordnet ist.

16. Antriebseinheit (1) nach einem der vorhergehenden Ansprüche,
**dadurch gekennzeichnet,**
**dass** in Richtung entlang der Rotationsachse (9) die Wellenlagerebene (E3), die Lagerebene (E2`) des Flexsplines (15) des Variationswellgetriebes (13), die Getriebeebene (E1') des Variationswellgetriebes (13), die Symmetrieebene (E5), die Getriebeebene (E1) des Antriebswellgetriebes (18), die Lagerebene (E2) des Flexsplines (19) des Antriebswellgetriebes (18) und insbesondere auch eine Elektroniklagerebene (E4) aufeinander folgend angeordnet sind.

17. Antriebseinheit (1) nach einem der vorhergehenden Ansprüche,
**dadurch gekennzeichnet,**
**dass** die Antriebseinheit (1) als Mittelantriebseinheit ausgebildet ist, wobei insbesondere die Rotationsachse (9) koaxial mit einer Tretachse (65) angeordnet ist, oder dass die Antriebseinheit (1) als Nabenantriebseinheit ausgebildet ist, wobei insbesondere die Rotationsachse (9) koaxial mit einer Radachse (66) angeordnet ist.

18. Antriebseinheit (1) nach einem der vorhergehenden Ansprüche,
**dadurch gekennzeichnet,**
**dass** die Erstreckung (B1) der Antriebseinheit (1) entlang der Rotationsachse (9) maximal 150 mm, bevorzugt maximal 135 mm, besonders bevorzugt maximal 120 mm, insbesondere beispielsweise maximal 100 mm, beträgt.

19. Antriebseinheit (1) nach einem der vorhergehenden Ansprüche,
**dadurch gekennzeichnet,**
**dass** eine Steuereinheit (42) zur Steuerung des Antriebselektromotors (27) und/oder des Variationselektromotors (22) vorgesehen ist, die wenigstens eines der folgenden Merkmale aufweist:
- sie ist zusammen mit einem Drehlager (44) für eine Kurbelwelle (32) in der senkrecht zur Rotationsachse (9) liegenden Elektroniklagerebene (E4) angeordnet;
- sie ist mit einem Drehwinkel- und/oder Drehzahl- und/oder Drehmomentsensor (51, 52) an der Eingangsantriebswelle (33) verbunden;
- sie ist mit einem Fahrgeschwindigkeitssensor (68) verbunden;
- sie ist mit einem Drehzahl- und/oder Drehwinkelsensor (38, 40), insbesondere Hallsensor, am Antriebselektromotor (27) und/oder am Variationselektromotor (22) verbunden;
- sie ist mit einem Stromstärkesensor (71) für den Antriebselektromotor (27) und/oder für den Variationselektromotor (22) verbunden;
- sie steuert die Drehzahlen und Drehmomente des Antriebselektromotors (27) und des Variationselektromotors (22) derart, dass die summierte Antriebsenergie inklusive der aus menschlicher Muskelkraft stammenden Energie an der Ausgangsabtriebswelle (12) der Energieanforderung der Antriebseinheit (1) entspricht;
- sie steuert die Drehzahl des Antriebselektromotors (27) proportional zur Fahrgeschwindigkeit;
- je nach Drehrichtung einer durch menschliche Muskelkraft angetriebenen Welle (32, 33) aktiviert die Steuereinheit (42) eine Antriebsunterstützungsfunktion oder eine Bremsfunktion;
- sie ist mit einem Federwegsensor (67) des Fortbewegungsmittels (F) verbunden und gleicht einen durch Einfederung des Fortbewegungsmittels (F) verursachten Pedalrückschlag durch eine Ansteuerung des Variationselektromotors (22) zumindest teilweise aus;
- sie ist mit einer Anzeigeeinheit (70) verbunden, die durch ein Sichtfenster in der Antriebseinheit (1) von außen sichtbar ist;
- sie bringt die Eingangsantriebswelle (33) durch eine Ansteuerung des Variationselektromotors (22) in eine Anfahrstellung.

## Claims

1. A drive unit (1) for a means of locomotion (F) drivable simultaneously by drive energy provided by human muscular strength and by electric motors, comprising
- an input shaft (33) for transmitting drive energy generated from human muscular strength,
- an output shaft (12) for delivering drive energy to a travel unit (72),
- a harmonic drive gearing (18) arranged around a rotation axis (9) and having a first wave generator (20), a first flexspline (19) and a ring gear (14),
- an electric drive motor (27) arranged around the rotation axis (9) and having a stator (28) and a rotor (31), wherein drive energy of the electric drive motor (27) can be transmitted to the output shaft (12) via the harmonic drive gearing (18),
the drive unit being **characterized by**:
- a harmonic variation gearing (13) arranged in the drive train between the input shaft (33) and the output shaft (12) and having a second wave generator (16), a second flexspline (15) and a ring gear (14'), the harmonic variation gearing (13) being arranged such that it receives the drive energy of the input shaft (33) obtained from human muscular strength and transmits it to the output shaft (12) of the drive unit (1),
- an electric variation motor (22) with a stator (23) and a rotor (26), the drive energy of which is likewise introduced into the harmonic variation gearing (13), wherein the summed energy from human muscular strength and the electric variation motor (22) can be transmitted to the output shaft (12) by the harmonic variation gearing (13),
wherein the ring gear (14) of the harmonic drive gearing (18) and the ring gear (14') of the harmonic variation gearing (13) are configured in a co-rotating manner relative to each other and transmit the summed drive energy from human muscular strength, the electric drive motor (27) and the electric variation motor (22) to the output shaft (12).

2. The drive unit (1) according to claim 1,
**characterized in that**
the harmonic variation gearing (13) and/or the electric variation motor (22) are arranged around the rotation axis (9).

3. The drive unit (1) according to any one of the preceding claims,
**characterized in that**
the harmonic variation gearing (13) forms a continuously variable transmission between the input shaft (33) and the output shaft (12).

4. The drive unit (1) according to any one of the preceding claims,
**characterized in that**
at least one, preferably both, of the flexsplines (15, 19) is configured as a sleeve (63, 64) extending in the direction of the rotation axis (9), which is connected on one axial side to a rotary bearing (45, 48) and toward the other axial side has an engagement region for the wave generator (16, 20), wherein a sleeve cavity (69) is provided between the rotary bearing (45, 48) and the wave generator (16, 20), as seen in the direction of the rotation axis (9), and
that at least one of the, preferably both, electric motors (22, 27) is arranged in axial direction of the rotation axis (9) at least partially, preferably completely, in the sleeve cavity (69) of the harmonic gearing (13, 18) associated with the respective electric motor (22, 27), in particular with respect to the axial extent of its rotor (26, 31) and/or stator (23, 28) along the rotation axis (9).

5. The drive unit (1) according to any one of the preceding claims,
**characterized in that**
the wave generator (16, 20), the flexspline (15, 19) and the ring gear (14, 14') of the harmonic drive gearing (18) and/or of the harmonic variation gearing (13) are arranged overlapping one another in a gearing plane (E1, E1') perpendicular to the rotation axis (9), and the flexspline (15, 19), in particular the sleeve (63) of the flexspline (15, 19), is mounted rotatably with respect to a counter bearing (43) in a bearing plane (E2, E2') perpendicular to the rotation axis (9), wherein the electric drive motor (27) and/or the electric variation motor (22) is arranged between the gearing plane (E1, E1') and the bearing plane (E2, E2').

6. The drive unit (1) according to any one of the preceding claims,
**characterized in that**
a speed and/or rotation angle sensor (38, 40), in particular a Hall sensor, is provided at the electric drive motor (27) and/or at the electric variation motor (22), wherein the speed and/or rotation angle sensor (38, 40) is arranged in particular in the sleeve cavity (69) of the flexspline (15, 19).

7. The drive unit (1) according to any one of the preceding claims,
**characterized in that**
a rotary bearing (50) for the output shaft (12) and a rotary bearing (49) for the input shaft (33) are arranged in a common shaft bearing plane (E3) perpendicular to the rotation axis (9).

8. The drive unit (1) according to any one of the preceding claims,
**characterized in that**
the two electric motors (22, 27) and/or the two harmonic gearings (13, 18) are arranged coaxially with respect to one another about the rotation axis (9).

9. The drive unit (1) according to any one of the preceding claims,
**characterized in that**
the harmonic gearings (13, 18) and the electric motors (22, 27), are configured and arranged symmetrically to one another with respect to a plane of symmetry (E5) extending perpendicular to the rotation axis (9).

10. The drive unit (1) according to any one of the preceding claims,
**characterized in that**
the input shaft (33) is connected to the flexspline (15) of the harmonic variation gearing (13) in a co-rotating manner at least in one direction of rotation, and the energy obtained from human muscular strength is introduced into the harmonic variation gearing (13) via the flexspline (15).

11. The drive unit (1) according to any one of the preceding claims,
**characterized in that**
the flexspline (19) of the harmonic drive gearing (18) is mounted on a stationary housing part (56) via a freewheel (37).

12. The drive unit (1) according to the preceding claim,
**characterized in that**
the freewheel (37) is switchable or the flexspline (19) and the stationary housing part (56) can be connected in a co-rotating manner by a separate clutch unit, so that the electric drive motor (27) can be operated as a generator which receives drive energy from the ring gear (14) and converts it into electrical energy.

13. The drive unit (1) according to the preceding claim,
**characterized in that**
above a maximum travel speed of the means of locomotion (F), the electric drive motor (27) is operated with drive power opposite to that of the electric variation motor (22) and of equal amount, so that the overall drive power applied by the electric motors (22, 27) to the output shaft (12) is zero.

14. The drive unit (1) according to any one of the preceding claims,
**characterized in that**
a rotary bearing (45) is arranged between a counter bearing (43) and the flexspline (19) of the harmonic drive gearing (18) in a bearing plane (E2) perpendicular to the rotation axis (9), and overlapping with a freewheel (37), and/or
a rotary bearing (48) is arranged between a counter bearing (43) and the flexspline (15) of the harmonic variation gearing (13) in a bearing plane (E2') perpendicular to the rotation axis (9), and overlapping with a freewheel (36).

15. The drive unit (1) according to any one of the preceding claims,
**characterized in that**
the wave generator (16, 20), the flexspline (15, 19) and the ring gear (14, 14') of the harmonic drive gearing (18) and/or of the harmonic variation gearing (13) are arranged in a gearing plane (E1, E1') perpendicular to the rotation axis (9) together with a rotary bearing (46, 47) for the rotor (26, 31) of the electric drive motor (27) and/or of the electric variation motor (22), in particular with respect to a counter bearing (43).

16. The drive unit (1) according to any one of the preceding claims,
**characterized in that**
in a direction along the rotation axis (9), the shaft bearing plane (E3), the bearing plane (E2') of the flexspline (15) of the harmonic variation gearing (13), the gearing plane (E1') of the harmonic variation gearing (13), the symmetry plane (E5), the gearing plane (E1) of the harmonic drive gearing (18), the bearing plane (E2) of the flexspline (19) of the harmonic drive gearing (18) and in particular also an electronics bearing plane (E4) are arranged in succession.

17. The drive unit (1) according to any one of the preceding claims,
**characterized in that**
the drive unit (1) is configured as a center drive unit, in particular wherein the rotation axis (9) is arranged coaxially with a pedaling axis (65), or that the drive unit (1) is configured as a hub drive unit, in particular wherein the rotation axis (9) is arranged coaxially with a wheel axis (66).

18. The drive unit (1) according to any one of the preceding claims,
**characterized in that**
the maximum extent (B1) of the drive unit (1) along the rotation axis (9) is not more than 150 mm, preferably not more than 135 mm, more preferably not more than 120 mm, in particular, for example, not more than 100 mm.

19. The drive unit (1) according to any one of the preceding claims,
**characterized in that**
a control unit (42) for controlling the electric drive motor (27) and/or the electric variation motor (22) is provided, which has at least one of the following features:
- it is arranged together with a rotary bearing (44) for a crankshaft (32) in the electronics bearing plane (E4) perpendicular to the rotation axis (9);
- it is connected to a rotation angle and/or speed and/or torque sensor (51, 52) at the input shaft (33);
- it is connected to a travel speed sensor (68);
- it is connected to a speed and/or rotation angle sensor (38, 40), in particular a Hall sensor, at the electric drive motor (27) and/or the electric variation motor (22);
- it is connected to an amperemeter (71) for the electric drive motor (27) and/or for the electric variation motor (22);
- it controls the speeds and torques of the electric drive motor (27) and the electric variation motor (22) such that the summed drive energy, including the energy obtained from human muscular strength, at the output shaft (12) corresponds to the energy requirement of the drive unit (1);
- it controls the speed of the electric drive motor (27) in proportion to the travel speed;
- depending on the direction of rotation of a shaft (32, 33) driven by human muscular strength, the control unit (42) activates a drive support function or a brake function;
- it is connected to a suspension travel sensor (67) of the means of locomotion (F) and at least partially compensates a pedal kickback caused by compression of the means of locomotion (F) by controlling the electric variation motor (22);
- it is connected to a display unit (70) which is visible from the outside through a viewing window in the drive unit (1);
- it brings the input shaft (33) into a starting position by controlling the electric variation motor (22).

## Revendications

1. Unité d'entraînement (1) pour un moyen de locomotion (F) pouvant être entraîné simultanément par une force musculaire humaine et l'énergie d'entraînement fournie par un moteur électrique, comprenant
- un arbre d'entraînement d'entrée (33) destiné à transférer une énergie d'entraînement générée par la force musculaire humaine,
- un arbre de sortie entraîné (12) destiné à fournir de l'énergie d'entraînement à un dispositif de déplacement (72),
- un engrenage d'arbre d'entraînement (18) disposé autour d'un axe de rotation (9) et comportant un premier générateur d'arbre (20), une première clavette souple (19) et une couronne (14),
- un moteur électrique d'entraînement (27) disposé autour de l'axe de rotation (9) et comportant un stator (28) et un rotor (31), dans laquelle l'énergie d'entraînement du moteur électrique d'entraînement (27) peut être transmise à l'arbre de sortie entraîné (12) par l'intermédiaire de l'engrenage d'arbre d'entraînement (18), l'unité d'entraînement est **caractérisée par :**
- un engrenage d'arbre de variation (13) disposé dans un train d'entraînement entre l'arbre d'entraînement d'entrée (33) et l'arbre de sortie entraîné (12) et comportant un second générateur d'arbre (16), une seconde clavette souple (15) et une couronne (14'), dans laquelle l'engrenage d'arbre de variation (13) est disposé de manière à recevoir l'énergie d'entraînement de l'arbre d'entraînement d'entrée (33), laquelle énergie provient de la force musculaire humaine, et à la transférer à l'arbre de sortie entraîné (12) de l'unité d'entraînement (1),
- un moteur électrique à variation (22) comportant un stator (23) et un rotor (26) dont l'énergie d'entraînement est également introduite dans l'engrenage d'arbre de variation (13), dans laquelle la somme de l'énergie de la force musculaire humaine et du moteur électrique à variation (22) peut être transmise à l'arbre de sortie entraîné (12) par l'engrenage d'arbre de variation (13),
dans laquelle la couronne (14) de l'engrenage d'arbre d'entraînement (18) et la couronne (14') de l'engrenage d'arbre de variation (13) sont réalisées solidaires en rotation l'une de l'autre et transmettent la somme de l'énergie d'entraînement provenant de la force musculaire humaine, du moteur électrique d'entraînement (27) et du moteur électrique à variation (22) à l'arbre de sortie entraîné (12).

2. Unité d'entraînement (1) selon la revendication 1,
**caractérisée en ce**
**que** l'engrenage d'arbre de variation (13) et/ou le moteur électrique à variation (22) sont disposés autour de l'axe de rotation (9).

3. Unité d'entraînement (1) selon l'une des revendications précédentes, **caractérisée en ce**
**que** l'engrenage d'arbre de variation (13) forme un engrenage à variation continue entre l'arbre d'entraînement d'entrée (33) et l'arbre de sortie entraîné (12).

4. Unité d'entraînement (1) selon l'une des revendications précédentes, **caractérisée en ce**
**qu'**au moins l'une des, de préférence les deux, clavettes souples (15, 19) est réalisée sous la forme d'un manchon (63, 64) s'étendant dans la direction de l'axe de rotation (9), lequel manchon est relié sur un côté axial à un palier de rotation (45, 48) et présente, vers l'autre côté axial, une zone de mise en prise pour le générateur d'arbre (16, 20), dans laquelle il existe un espace intérieur de manchon (69) entre le palier de rotation (45, 48) et le générateur d'arbre (16, 20), vu dans la direction de l'axe de rotation (9), et
**qu**'au moins l'un des, de préférence les deux, moteurs électriques (22, 27) est disposé dans la direction axiale de l'axe de rotation (9) au moins partiellement, de préférence complètement, dans l'espace intérieur de manchon (69) de l'engrenage d'arbre (13, 18) associé au moteur électrique (22, 27) respectif, en particulier par rapport à l'extension axiale de son rotor (26, 31) et/ou de son stator (23, 28) le long de l'axe de rotation (9).

5. Unité d'entraînement (1) selon l'une des revendications précédentes, **caractérisée en ce**
**que** le générateur d'arbre (16, 20), la clavette souple (15, 19) et la couronne (14, 14`) de l'engrenage d'arbre d'entraînement (18) et/ou de l'engrenage d'arbre de variation (13) sont disposés de manière à se chevaucher dans un plan d'engrenage (E1, E1') perpendiculaire à l'axe de rotation (9), et la clavette souple (15, 19), en particulier le manchon (63) de la clavette souple (15, 19), est montée de manière à pouvoir tourner par rapport à un contre-palier (43) dans un plan de palier (E2, E2') perpendiculaire à l'axe de rotation (9), dans laquelle le moteur électrique d'entraînement (27) et/ou le moteur électrique à variation (22) est disposé entre le plan d'engrenage (E1, E1') et le plan de palier (E2, E2').

6. Unité d'entraînement (1) selon l'une des revendications précédentes, **caractérisée en ce**
**qu**'un capteur de vitesse de rotation et/ou d'angle de rotation (38, 40), en particulier un capteur à effet Hall, est prévu sur le moteur électrique d'entraînement (27) et/ou sur le moteur électrique à variation (22), dans laquelle le capteur de vitesse de rotation et/ou d'angle de rotation (38, 40) est disposé en particulier dans l'espace intérieur de manchon (69) de la clavette souple (15, 19).

7. Unité d'entraînement (1) selon l'une des revendications précédentes, **caractérisée en ce**
**qu'**un palier de rotation (50) pour l'arbre de sortie entrainé (12) et un palier de rotation (49) pour l'arbre d'entraînement d'entrée (33) sont disposés dans un plan de palier d'arbre (E3) commun perpendiculaire à l'axe de rotation (9).

8. Unité d'entraînement (1) selon l'une des revendications précédentes, **caractérisée en ce**
**que** les deux moteurs électriques (22, 27) et/ou les deux engrenages d'arbre (13, 18) sont disposés coaxialement l'un à l'autre autour de l'axe de rotation (9).

9. Unité d'entraînement (1) selon l'une des revendications précédentes, **caractérisée en ce**
**que** les engrenages d'arbre (13, 18) et les moteurs électriques (22, 27) sont réalisés et disposés symétriquement les uns par rapport aux autres par rapport à un plan de symétrie (E5) s'étendant perpendiculairement à l'axe de rotation (9).

10. Unité d'entraînement (1) selon l'une des revendications précédentes, **caractérisée en ce**
**que** l'arbre d'entraînement d'entrée (33) est relié, au moins dans un sens de rotation, de manière solidaire en rotation à la clavette souple (15) de l'engrenage d'arbre de variation (13), et l'énergie provenant de la force musculaire humaine est introduite dans l'engrenage d'arbre de variation (13) par l'intermédiaire de la clavette souple (15).

11. Unité d'entraînement (1) selon l'une des revendications précédentes, **caractérisée en ce**
**que** la clavette souple (19) de l'engrenage d'arbre d'entraînement (18) est montée sur une partie de boîtier (56) stationnaire par l'intermédiaire d'une roue libre (37).

12. Unité d'entraînement (1) selon la revendication précédente, **caractérisée en ce**
**que** la roue libre (37) est conçue de manière à pouvoir être commutée, ou la clavette souple (19) et la partie de boîtier (56) stationnaire peuvent être reliées de manière solidaire en rotation par une unité d'accouplement séparée, de sorte que le moteur électrique d'entraînement (27) peut fonctionner comme un générateur qui reçoit l'énergie d'entraînement de la couronne (14) et la transforme en énergie électrique.

13. Unité d'entraînement (1) selon la revendication précédente, **caractérisée en ce**
**que** le moteur électrique d'entraînement (27) fonctionne, à partir d'une vitesse de déplacement maximale du moyen de locomotion (F), avec une puissance d'entraînement opposée à celle du moteur électrique à variation (22) et coïncidant en valeur absolue, de sorte que la puissance d'entraînement totale appliquée par les moteurs électriques (22, 27) à l'arbre de sortie entraîné (12) est égale à zéro.

14. Unité d'entraînement (1) selon l'une des revendications précédentes, **caractérisée en ce**
**qu**'un palier de rotation (45) est disposé, en chevauchement avec une roue libre (37), entre un contre-palier (43) et la clavette souple (19) de l'engrenage d'arbre d'entraînement (18) dans un plan de palier (E2) perpendiculaire à l'axe de rotation (9) et/ou
**qu**'un palier de rotation (48) est disposé, en chevauchement avec une roue libre (36), entre un contre-palier (43) et la clavette souple (15) de l'engrenage d'arbre de variation (13) dans un plan de palier (E2`) perpendiculaire à l'axe de rotation (9).

15. Unité d'entraînement (1) selon l'une des revendications précédentes, **caractérisée en ce**
**que** le générateur d'arbre (16, 20), la clavette souple (15, 19) et la couronne (14, 14`) de l'engrenage d'arbre d'entraînement (18) et/ou de l'engrenage d'arbre de variation (13) sont disposés dans un plan d'engrenage (E1, E1 `) perpendiculaire à l'axe de rotation (9), conjointement avec un palier de rotation (46, 47) pour le rotor (26, 31) du moteur électrique d'entraînement (27) et/ou du moteur électrique à variation (22), en particulier par rapport à un contre-palier (43).

16. Unité d'entraînement (1) selon l'une des revendications précédentes, **caractérisée en ce**
**que,** dans la direction le long de l'axe de rotation (9), le plan de palier d'arbre (E3), le plan de palier (E2`) de la clavette souple (15) de l'engrenage d'arbre de variation (13), le plan d'engrenage (E1') de l'engrenage d'arbre de variation (13), le plan de symétrie (E5), le plan d'engrenage (E1) de l'engrenage d'arbre d'entraînement (18), le plan de palier (E2) de la clavette souple (19) de l'engrenage d'arbre d'entraînement (18) et en particulier également un plan de palier électronique (E4) sont disposés les uns à la suite des autres.

17. Unité d'entraînement (1) selon l'une des revendications précédentes, **caractérisée en ce**
**que** l'unité d'entraînement (1) est conçue comme une unité d'entraînement centrale, dans laquelle l'axe de rotation (9) est en particulier disposé coaxialement avec un axe de pédalier (65), **ou en ce que** l'unité d'entraînement (1) est conçue comme une unité d'entraînement de moyeu, dans laquelle l'axe de rotation (9) est en particulier disposé coaxialement avec un axe de roue (66).

18. Unité d'entraînement (1) selon l'une des revendications précédentes, **caractérisée en ce**
**que** l'extension (B1) de l'unité d'entraînement (1) le long de l'axe de rotation (9) est de 150 mm au plus, de préférence de 135 mm au plus, de manière particulièrement préférée de 120 mm au plus, en particulier par exemple de 100 mm au plus.

19. Unité d'entraînement (1) selon l'une des revendications précédentes, **caractérisée en ce**
**qu'i**l est prévu une unité de commande (42) pour la commande du moteur électrique d'entraînement (27) et/ou du moteur électrique à variation (22), laquelle unité de commande présente au moins l'une des caractéristiques suivantes :
- elle est disposée conjointement avec un palier de rotation (44) pour un vilebrequin (32) dans le plan de palier électronique (E4) perpendiculaire à l'axe de rotation (9) ;
- elle est reliée à un capteur d'angle de rotation et/ou de vitesse de rotation et/ou de couple (51, 52) sur l'arbre d'entraînement d'entrée (33) ;
- elle est reliée à un capteur de vitesse de déplacement (68) ;
- elle est reliée à un capteur de vitesse de rotation et/ou d'angle de rotation (38, 40), en particulier un capteur à effet Hall, sur le moteur électrique d'entraînement (27) et/ou sur le moteur électrique à variation (22) ;
- elle est reliée à un capteur d'intensité de courant (71) pour le moteur électrique d'entraînement (27) et/ou pour le moteur électrique à variation (22) ;
- elle commande les vitesses de rotation et les couples du moteur électrique d'entraînement (27) et du moteur électrique à variation (22) de telle sorte que la somme de l'énergie d'entraînement, y compris l'énergie provenant de la force musculaire humaine sur l'arbre de sortie entraîné (12), correspond au besoin en énergie de l'unité d'entraînement (1) ;
- elle commande la vitesse de rotation du moteur électrique d'entraînement (27) proportionnellement à la vitesse de déplacement ;
- selon le sens de rotation d'un arbre (32, 33) entraîné par la force musculaire humaine, l'unité de commande (42) active une fonction d'assistance à l'entraînement ou une fonction de freinage ;
- elle est reliée à un capteur de course à ressort (67) du moyen de locomotion (F) et compense au moins partiellement un rebond de pédale provoqué par la compression de ressort du moyen de locomotion (F) par une commande du moteur électrique à variation (22) ;
- elle est reliée à une unité d'affichage (70) visible de l'extérieur à travers un hublot situé dans l'unité d'entraînement (1) ;
- elle amène l'arbre d'entraînement d'entrée (33) dans une position de démarrage par une commande du moteur électrique à variation (22).
